# EUROPÄISCHE PATENTSCHRIFT

(11) **EP 3 676 995 B1**
(45) Veröffentlichungstag und Bekanntmachung des Hinweises auf die Patenterteilung: **06.10.2021**
(21) Anmeldenummer: 18759373.6
(22) Anmeldetag: 27.07.2018
(51) Int. Cl.: H04L 12/40, H04L 12/861, H04L 12/935

(54) **MASTER EINES BUSSYSTEMS**
MASTER OF A BUS SYSTEM
MAÎTRE D'UN SYSTÈME DE BUS

(30) Priorität: 31.08.2017 DE 102017008186
(43) Veröffentlichungstag der Anmeldung: 08.07.2020
(73) Patentinhaber: WAGO Verwaltungsgesellschaft mbH, 32423 Minden (DE)
(72) Erfinder: JEROLM, Daniel, 49152 Bad Essen (DE); QUAKERNACK, Frank, 33615 Bielefeld (DE)
(74) Vertreter: Müller, Wolf-Christian
(86) Internationale Anmeldenummer: PCT/IB2018/000810
(87) Internationale Veröffentlichungsnummer: WO 2019/043447

(56) Entgegenhaltungen:
- EP-A1- 2 110 995
- EP-A1- 2 355 419
- EP-A2- 1 133 106

## Beschreibung

Die Erfindung betrifft einen Master eines Bussystems zur Prozesssteuerung. Das Bussystem weist weiterhin zumindest einen Slave und einen Bus auf.

Aus der DE 100 06 265 B4 ist eine Vorrichtung zur Steuerung des Datenaustauschs eines Kommunikationsteilnehmers eines seriellen Master-Slave-Kommunikationssystems bekannt. Es bestehe der Bedarf, die Kommunikationsmöglichkeiten innerhalb eines seriellen Master-Slave-Kommunikationssystems zu erweitern ohne die Vorteile zu stark zu mindern. Der Kommunikationsteilnehmer mit der Vorrichtung fungiert dabei als Master innerhalb einer Gruppe mehrerer Master/Slave Gruppen des seriellen Master-Slave-Kommunikationssystems.

Die EP2110995 A1, offenbart eine Datenübertragungseinrichtung zur Verwendung in einem Kommunikationssystem, z.B. einem Personalcomputer, mit einer Kopiertabelle, die eine Ausgangssequenz von Daten eines der Bussysteme bereitstellt, und einer Übertragungseinheit, die Daten zwischen zwei Bussystemen entsprechend der Sequenz aus einem Speicher überträgt. Ein Ausgang des Speichers ist mit einem Multiplexer der Einheit verbunden. Ein weiterer Speicher speichert zusätzliche Daten, wobei die Einheit die Daten mit den zusätzlichen Daten kombiniert und die kombinierten Daten an das Bussystem liefert.

Der vorliegenden Erfindung liegt die Aufgabe zu Grunde, einen Master eines Bussystems anzugeben, der die Flexibilität der Kommunikation innerhalb des Bussystems möglichst erweitert.

Diese Aufgabe wird durch einen Master eines Bussystems mit den Merkmalen des Anspruchs 1 gelöst. Vorteilhafte Weiterbildungen der Erfindung sind in den abhängigen Ansprüchen angegeben.

Demzufolge ist ein Master eines Bussystems zur Prozesssteuerung vorgesehen. Das Bussystem weist zusätzlich zum Master einen Slave und einen Bus, der den Master und den Slave verbindet, auf. Unter einem Slave ist dabei zumindest ein Slave zu verstehen, so dass innerhalb des Bussystems einer oder mehrere Slaves mit dem Master verbunden sind.

Der Master weist eine Transceiverschaltung zum Senden von Sendedaten und Empfangen von Empfangsdaten mittels Datenpakete auf. Die Sendedaten und die Empfangsdaten sind für die Prozesssteuerung vorgesehen. Die Sendedaten und die Empfangsdaten können auch als Prozessdaten bezeichnet werden. Vorzugsweise ist die Transceiverschaltung zum Senden und Empfangen der Datenpakete unmittelbar mit dem Bus verbunden.

Der Master hat einen Kanal, der zumindest einen Empfangs-Speicherbereich aufweist. Dabei ist unter einem Kanal zumindest ein Kanal zu verstehen, so dass der Master genau einen Kanal oder mehrere Kanäle, die jeweils einen Empfangs-Speicherbereich aufweisen können, hat. Der Kanal weist eine elektronische Schaltung auf, die mit der Transceiverschaltung verbunden ist. Die Schaltung des Kanals ist vorzugsweise für einen Kommunikationskanal über den Bus spezifiziert. Entsprechend können unterschiedliche Kanäle des Masters unterschiedliche Schaltungen aufweisen. Weiterhin kann der Kanal eine logische Verbindung zu einem oder mehreren Slaves über den Bus aufweisen. Der Empfangs-Speicherbereich ist vorteilhafterweise als Buffer ausgebildet. Beispielsweise ist der Empfangs-Speicherbereich mit der Funktion eines FIFOs ausgebildet. Der Empfangs-Speicherbereich ist beispielsweise durch eine Anzahl von Hardware-Buffern in einem ASIC (engl. - Application Specific Integrated Circuit / Anwendungsspezifischer Schaltkreis) oder ist beispielweise als Teil eines insbesondere flüchtigen Gesamtspeichers in einem FPGA (engl. - Field Programmable Gate Array) ausgebildet. Vorzugsweise ist die maximale Größe des Empfangs-Speicherbereichs fest eingestellt. Vorteilhafterweise ist der Kanal derart ausgebildet, dass im laufenden Betrieb auf den Empfangs-Speicherbereich kein Software-Programm zugreifen kann.

Die Transceiverschaltung ist eingerichtet, die Empfangsdaten eines über den Bus empfangenen Datenpakets in den Empfangs-Speicherbereich zu schreiben. Vorzugsweise ist die Transceiverschaltung eingerichtet, die Empfangsdaten basierend auf einer Struktur des Datenpakets aus dem Datenpaket zu entnehmen. Zusätzlich kann die Transceiverschaltung eine Anzahl weiterer Funktionen, wie beispielsweise die Prüfung des Datenpakets, aufweisen.

Der Kanal weist eine Selektionsschaltung auf. Dabei ist unter einer Selektionsschaltung zumindest eine Selektionsschaltung zu verstehen, so dass der Kanal genau eine Selektionsschaltung oder mehrere Selektionsschaltungen aufweisen kann. Ein Ausgang der Selektionsschaltung ist mit der Transceiverschaltung verbunden. Zwar ist es möglich, dass die Auswahl durch die Selektionsschaltung mittels Tabellen und Adressierung erfolgt, bevorzugt ist jedoch vorgesehen, dass die Selektionsschaltung durch Schaltelemente gebildet ist. Die Schaltelemente können beispielsweise einen Multiplexer bilden. Auch ist es möglich, die Selektionsschaltung durch eine Gatterlogik zu bilden, um die Sendedaten für das zu sendende Datenpaket auszuwählen.

Die Selektionsschaltung weist einen ersten Eingang zur Auswahl erster Daten auf. Die Selektionsschaltung weist zudem einen zweiten Eingang auf. Vorzugsweise sind der erste Eingang und der zweite Eingang digitale Eingänge mit derselben Bitbreite. Der zweite Eingang ist mit dem Empfangs-Speicherbereich verbunden. Der erste Eingang ist zur Bereitstellung der ersten Daten verbunden.

Die Selektionsschaltung ist eingerichtet, die Sendedaten aus den ersten Daten und den in den Empfangs-Speicherbereich geschriebenen Empfangsdaten auszuwählen und die Sendedaten in die Transceiverschaltung für ein zu sendendes Datenpaket auszugeben. Die Auswahl umfasst dabei den ersten Fall, dass sämtliche erste Daten als Sendedaten durch die Selektionsschaltung ausgewählt werden. Die Auswahl umfasst auch den zweiten Fall, dass sämtliche Empfangsdaten als Sendedaten durch die Selektionsschaltung ausgewählt werden. Die Auswahl umfasst ebenfalls den dritten Fall, dass ein Teil der ersten Daten zusammen mit einem Teil der Empfangsdaten als Sendedaten durch die Selektionsschaltung ausgewählt werden.

Durch diese Merkmale der Erfindung kann eine größere Flexibilität erzielt werden. Vorteile konkreter Ausführungsbeispiele der Erfindung sind in der Figurenbeschreibung erläutert.

Gemäß einer vorteilhaften Weiterbildung der Erfindung ist die Transceiverschaltung eingerichtet, ein Datenpaket mit einem Kopf und einem Datenbereich über den Bus zu empfangen und die Empfangsdaten aus dem Datenbereich des empfangenen Datenpakets zu lesen. Zum Empfangen des Datenpakets wird beispielsweise ein über den Bus an die Transceiverschaltung eingehendes Signal abgetastet. Zum Lesen der Empfangsdaten aus dem Datenbereich des empfangenen Datenpakets werden beispielsweise die Empfangsdaten innerhalb des Datenpakets - beispielweise anhand der Position innerhalb des Datenpakets - ermittelt.

Gemäß einer vorteilhaften Weiterbildung der Erfindung ist die Transceiverschaltung eingerichtet, ein zu sendendes Datenpaket mit einem Kopf und einem Datenbereich zu erzeugen. Zur Erzeugung wird vorteilhafterweise der Kopf neu gebildet und beispielweise in ein Senderegister geschrieben. An den neu gebildeten Kopf wird dann beispielweise der Datenbereich angehängt. Zusätzlich zu Kopf und Datenbereich kann das Datenpaket einen oder mehrere weitere Bereiche aufweisen, beispielweise einen Prüfwert CRC (engl. CRC - Cyclic Redundancy Check), dieser kann auch als Prüfsumme bezeichnet werden.

Gemäß einer vorteilhaften Weiterbildung der Erfindung ist die Verbindung zwischen dem Empfangs-Speicherbereich und dem zweiten Eingang zur direkten Übertragung der Empfangsdaten ausgebildet. Ein Softwareprogramm einer CPU ist zur direkten Übertragung nicht erforderlich. Beispielsweise ist die direkte Verbindung durch eine feste Verdrahtung oder durch einen Kopierer - z.B. einer State-Machine oder einem Speicherdirektzugriff (DMA)- realisiert.

Gemäß einer vorteilhaften Weiterbildung der Erfindung ist die Transceiverschaltung eingerichtet, mit Erzeugung des zu sendenden Datenpakets die Sendedaten in den Datenbereich des zu sendenden Datenpakets zu schreiben. Zum Schreiben können die Sendedaten beispielsweise nach der Erzeugung des Kopfes des Datenpakets im Datenbereich angehängt werden. Der Datenbereich kann auch als Payload bezeichnet werden.

Gemäß einer vorteilhaften Weiterbildung der Erfindung ist die Transceiverschaltung eingerichtet, die Empfangsdaten des empfangenen Datenpakets zu prüfen und die Empfangsdaten in den Empfangs-Speicherbereich zu schreiben. Bevorzugt ist die Transceiverschaltung eingerichtet, nur bei positivem Prüfungsergebnis die Empfangsdaten in den Empfangs-Speicherbereich zu schreiben. Zur Prüfung kann beispielweise ein mit dem Datenpaket übertragener Gültigkeitswert ausgewertet werden. Bevorzugt ist die Transceiverschaltung eingerichtet, die Empfangsdaten anhand eines Prüfwertes CRC zu prüfen. Der Prüfwert weist beispielweise 32-Bit-Koeffizienten auf.

Gemäß einer vorteilhaften Weiterbildung der Erfindung weist der Empfangs-Speicherbereich mindestens eine Größe auf, um alle Empfangsdaten des empfangenen Datenpakets zeitgleich zu speichern. Vorteilhafterweise ist die Größe des Empfangs-Speicherbereichs manuell oder automatisch konfigurierbar.

Gemäß einer vorteilhaften Weiterbildung der Erfindung weist der Master einen ersten Buffer und einen zweiten Buffer zum Empfang der Empfangsdaten auf. Beispielsweise sind der erste Buffer und der zweite Buffer Teilbereiche des Empfangs-Speicherbereichs. Ein Buffer kann auch als Puffer bezeichnet werden. Der Buffer dient der temporären Zwischenspeicherung der Empfangsdaten.

Vorzugsweise ist die Transceiverschaltung eingerichtet, die Empfangsdaten in den zweiten Buffer zu schreiben, wenn vorhergehende Empfangsdaten eines vorhergehend empfangenen Datenpakets als gültige Empfangsdaten im ersten Buffer gespeichert sind.

Vorzugsweise ist die Transceiverschaltung eingerichtet, die Empfangsdaten in den ersten Buffer zu schreiben, wenn vorhergehende Empfangsdaten eines vorhergehend empfangenen Datenpakets als gültige Empfangsdaten im zweiten Buffer gespeichert sind.

Gemäß einer vorteilhaften Weiterbildung der Erfindung ist die Selektionsschaltung eingerichtet, zur Auswahl der für die Sendedaten aus dem Empfangs-Speicherbereich die Empfangsdaten aus demjenigen aus ersten Buffer oder zweiten Buffer auszuwählen, die aus dem zuletzt empfangenen und gültige Empfangsdaten aufweisenden Datenpaket stammen.

Gemäß einer vorteilhaften Weiterbildung der Erfindung weist der erste Buffer mindestens eine Größe auf, um alle Empfangsdaten des empfangenen Datenpakets zeitgleich zu speichern. Gemäß einer vorteilhaften Weiterbildung der Erfindung weist der zweite Buffer mindestens eine Größe auf, um alle Empfangsdaten des empfangenen Datenpakets zeitgleich zu speichern.

Gemäß einer vorteilhaften Weiterbildung ist die Transceiverschaltung eingerichtet, die Datenpakete für die Sendedaten und die Empfangsdaten zu erzeugen. Die Sendedaten und die Empfangsdaten sind vorzugsweise dabei Bestandteil der Prozesssteuerung. Demzufolge ist die Transceiverschaltung zur Generierung des Datenpakets mit einer vorgegebenen Datenpaketstruktur eingerichtet. Dabei werden sowohl die vom Master gesendeten Datenpakete als auch die vom Master empfangenen Datenpakete im Bussystem ausschließlich von der Transceiverschaltung des Masters erzeugt. Dabei gelangen die vom Master gesendeten Datenpakete über den Bus und das Slave oder mehrere Slaves wieder zum Master zurück. Vorteilhafterweise ist der Bus dabei als Ringbus ausgebildet. Vorzugsweise weist das erzeugte Datenpaket einen Kopf und einen Datenbereich für die Sendedaten bzw. Empfangsdaten auf.

Gemäß einer vorteilhaften Weiterbildung ist die Transceiverschaltung eingerichtet, den Kanal zu den Sendedaten mittels einer Kennung zuzuordnen. Die Kennung wird hierzu in das Datenpaket mit den zugehörigen Sendedaten eingefügt. Vorteilhafterweise ist die Transceiverschaltung zudem eingerichtet, den Kanal zu den Empfangsdaten mittels der Kennung im Datenpaket zuzuordnen. Hierzu wird die Kennung aus dem empfangenen Datenpaket ausgelesen.

Zwar ist möglich, dass die Transceiverschaltung eingerichtet ist, die Zuordnung mittels Adressierung durchzuführen, gemäß einer vorteilhaften Ausgestaltung weist die Transceiverschaltung jedoch für die Zuordnung eine Zuordnungsschaltung, beispielsweise mit einer Tabelle (LUT - engl. Look Up Table) auf. Beispielsweise ist jedem am Eingang der LUT anliegendem Kennwert der Kennung eine Verbindung zu einem Kanal (von mehreren Kanälen) zugeordnet.

Gemäß einer vorteilhaften Weiterbildung weist die Transceiverschaltung eine erste Finite-State-Machine (Endlicher Automat) auf. Die Transceiverschaltung ist eingerichtet, das Datenpaket für die Prozesssteuerung mit der Kennung mittels der ersten Finite-State-Machine zu erzeugen. Vorzugsweise ist die erste Finite-State-Machine durch eine abgeschlossene, spezifische Hardwareschaltung gebildet. Dies ermöglicht, dass die erste Finite-State-Machine weitgehend unabhängig von und/oder parallel zu einem Programm auf einem Prozessor des Masters arbeitet.

Gemäß einer vorteilhaften Weiterbildung weist die Transceiverschaltung eine zweite Finite-State-Machine auf. Die zweite Finite-State-Machine ist eingerichtet, die Empfangsdaten des empfangenen Datenpakets basierend auf der im empfangenen Datenpaket enthaltenen Kennung und der Zuordnung zum Kanal in den Empfangs-Speicherbereich des Kanals zu schreiben. Vorzugsweise ist die zweite Finite-State-Machine durch eine abgeschlossene, spezifische Hardwareschaltung gebildet. Dies ermöglicht, dass die zweite Finite-State-Machine weitgehend unabhängig von und/oder parallel zu einem Programm auf einem Prozessor des Masters arbeitet. Weiterhin sind die erste und zweite Finite-State-Machine vorzugsweise als getrennte Schaltungsteile des Transceivers ausgebildet.

Gemäß einer vorteilhaften Weiterbildung weist die Transceiverschaltung einen Steuereingang auf. Die Transceiverschaltung ist eingerichtet, das Datenpaket basierend auf einem Steuersignal am Steuereingang zu erzeugen. Vorzugsweise weist der Master eine Rahmengeneratorschaltung auf. Die Rahmengeneratorschaltung ist eingerichtet, einen Zyklusrahmen zu erzeugen und innerhalb des Zyklusrahmens Datenpakete zeitlich zu positionieren. Die Rahmengeneratorschaltung ist eingerichtet, für ein Datenpaket das Steuersignal zu erzeugen und am Steuereingang der Transceiverschaltung anzulegen.

Gemäß einer vorteilhaften Weiterbildung weist der Kanal zur Speicherung der ersten Daten einen Sende-Speicherbereich auf. Vorteilhafterweise ist der Master eingerichtet, die ersten Daten als Sendedaten in den Sende-Speicherbereich zu schreiben. Beispielsweise weist der Master einen Prozessor und ein vom Prozessor durchgeführtes Programm auf, die zur Prozesssteuerung eingerichtet sind. Vorteilhafterweise sind der Prozessor und das Programm eingerichtet, die ersten Daten als Sendedaten in den Sende-Speicherbereich über eine Schnittstelle des Kanals zu schreiben.

Gemäß einer vorteilhaften Weiterbildung weist der Master eine Feldbus-Schnittstellenschaltung auf. Die Feldbus-Schnittstellenschaltung ist mit dem Sende-Speicherbereich des Kanals verbunden. Beispielsweise ist die Feldbus-Schnittstellenschaltung mit dem Sende-Speicherbereich über einen integrierten, chip-internen Parallelbus verbunden. Die Feldbus-Schnittstellenschaltung ist zum Eingeben von über einen Feldbus empfangenen Prozessdaten - als die ersten Daten - in den Sende-Speicherbereich eingerichtet. Beispielsweise können die Prozessdaten aus einem Feldbustelegramm entnommen werden und geändert oder unverändert als erste Daten in den Sende-Speicherbereich geschrieben werden.

Gemäß einer vorteilhaften Weiterbildung ist die Selektionsschaltung zur bitgranularen Auswahl eingerichtet. Mittels der Selektionsschaltung sind Sende-Bits der Sendedaten aus Bits der ersten Daten und Bits der Empfangsdaten bitweise zusammengesetzt. Vorteilhafterweise weist die Selektionsschaltung zur bitgranularen Auswahl für jedes Bit ein Umschaltelement auf, wobei jedes Umschaltelement wiederum durch ein Steuerbit steuerbar ist.

Gemäß einer vorteilhaften Weiterbildung weist der erste Eingang der Selektionsschaltung für die ersten Daten eine Bitbreite von mehreren Bits auf. Vorteilhafterweise weist die Selektionsschaltung für jedes der mehreren Bits ein Schaltelement auf. Vorteilhafterweise ist die Selektionsschaltung derart eingerichtet, dass die Schaltelemente unabhängig voneinander ansteuerbar sind.

Gemäß einer vorteilhaften Weiterbildung weist der Kanal einen Steuer-Speicherbereich mit Steuerwerten zur Steuerung der Selektionsschaltung auf. Die Steuerwerte können dabei vorzugsweise bitgranular die Schaltelemente der Selektionsschaltung ansteuern, um die Bits der Sendedaten einzeln aus Bits der ersten Daten und Bits der Empfangsdaten zusammenzusetzen.

Gemäß einer anderen vorteilhaften Weiterbildung sind die ersten Daten des Kanals feste Daten. Beispielsweise ist es dabei möglich, dass die ersten Daten in einem Register einprogrammiert sind. Bevorzugt sind die festen Daten durch Anschlüsse an High-Potential und/oder Low-Potential gebildet. Die festen Daten liegen am ersten Eingang der Selektionsschaltung an. Beispielsweise weisen die Bits der ersten Daten alle Low-Potential auf.

Gemäß einer vorteilhaften Weiterbildung weist der Empfangs-Speicherbereich einen Steuerausgang zur Ausgabe eines Steuersignals zur Steuerung der Selektionsschaltung auf. Der Steuerausgang ist hierzu mit einem Eingang der Selektionsschaltung verbunden. Der Empfangs-Speicherbereich ist eingerichtet, einen Wert des Steuersignals basierend auf dem Empfang der Empfangsdaten an den Eingang der Selektionsschaltung anzulegen. Vorteilhafterweise ist der Empfangs-Speicherbereich eingerichtet, den Wert des Steuersignals basierend auf einem als gültig erkannten Empfang zu setzen.

Gemäß einer vorteilhaften Weiterbildung weist der Master eine Mehrzahl von Kanälen auf. Vorteilhafterweise sind die Schaltungen von zumindest zwei Kanälen unterschiedlich ausgebildet. Vorteilhafterweise weist jeder der zwei Kanäle zumindest zwei unterschiedliche Merkmale der vorhergehend erläuterten Weiterbildungen auf.

Die Aufgabe wird weiterhin durch ein Verfahren mit den Merkmalen des Anspruchs 22 gelöst. Vorteilhafte Weiterbildungen sind Gegenstand von abhängigen Ansprüchen.

Demzufolge ist ein Verfahren zum Betrieb eines Bussystems zur Prozesssteuerung vorgesehen. Das Bussystem weist einen Master und einen Slave auf. Unter einem Slave ist dabei zumindest ein Slave zu verstehen, so dass der Master genau ein Slave oder mehrere Slaves aufweist.

Im Verfahren wird vom Master ein Datenpaket mit Sendedaten für die Prozesssteuerung erzeugt. Vorteilhafterweise werden zur Erzeugung des Datenpakets Teile des Datenpakets, wie beispielsweise ein Kopf und ein Nutzdatenbereich bestimmt und zwischengespeichert. Die Sendedaten sind dabei Daten, die vom Master zumindest an den Slave oder an mehrere Slaves des Bussystems gesendet werden.

Vom Master werden die Sendedaten aus einem ausgewählten Kanal in einen Nutzdatenbereich des Datenpakets geschrieben. Beispielsweise weist der Kanal einen Sende-Speicherbereich auf, der die Sendedaten enthält. Vorzugsweise beginnt das Schreiben nach der Auswahl des Kanals, jedoch bevor das Senden des Datenpakets durch den Master beginnt.

Vom Master wird eine zum ausgewählten Kanal zugehörige Kennung in das Datenpaket geschrieben. Dabei kann die Kennung in den Kopf oder in den Nutzdatenbereich des Datenpakets geschrieben werden. Die Kennung weist vorzugsweise einen Wert mit einer festen Anzahl von Bits, beispielsweise 4 Bits oder 8 Bits auf. Die Zugehörigkeit zwischen Kennung und Kanal kann beispielsweise durch eine Tabelle oder durch eine andere Zuordnungsvorschrift erfolgen.

Vom Master wird das Datenpaket beinhaltend die Kennung und die Sendedaten an den Slave gesendet. Vorteilhafterweise wird das Datenpaket zu einem festgelegten Zeitpunkt innerhalb eines Zyklusrahmens gesendet.

Das an den Slave gesendete Datenpaket wird zurück an den Master übertragen. Zuvor kann der Slave das Datenpaket, insbesondere Daten im Nutzdatenbereich verändern. Hierdurch werden Daten vom Slave an den Master gerichtet.

Nachfolgend wird das Datenpaket vom Master empfangen. Vom Master wird das empfangende Datenpaket basierend auf der Kennung dem ausgewählten Kanal zugeordnet. Hierzu wird die Kennung innerhalb des Datenpakets, beispielsweise an der Position innerhalb des Datenpakets, ermittelt. Die Kennung kann beispielsweise mittels einer Tabelle wiederum eindeutig dem Kanal zugeordnet werden. Es stimmen bei identischer Kennung der Kanal des gesendeten Datenpakets und der Kanal des empfangenen Datenpakets überein.

Empfangsdaten des empfangenden Datenpakets werden im ausgewählten Kanal gespeichert. Die im Kanal gespeicherten Empfangsdaten können nachfolgend weitergenutzt werden. Beispielsweise werden die Empfangsdaten durch den Master ausgewertet. Auch ist es möglich, die Empfangsdaten weiterzusenden, beispielsweise über einen an den Master angeschlossenen Feldbus.

Gemäß einer vorteilhaften Weiterbildung werden die zuvor erläuterten Verfahrensschritte in der genannten Reihenfolge ausgeführt.

Gemäß einer vorteilhaften Weiterbildung wird vom Master ein Kanal aus einer Menge von zumindest zwei unterschiedlichen Kanälen für unterschiedliche Sendedaten ausgewählt. Die Auswahl wird vorzugsweise durch eine weitere Steuerschaltung des Masters gesteuert.

Gemäß einer vorteilhaften Weiterbildung wird zumindest ein Teil der im ausgewählten Kanal gespeicherten Empfangsdaten für ein zu sendendes Datenpaket in die Sendedaten geschrieben. Vorteilhafterweise wird der Teil der im ausgewählten Kanal gespeicherten Empfangsdaten durch den Master ausgewählt. Der Teil wird durch den Master dabei mit weiteren Daten zur Bildung der Sendedaten zusammengefügt. Gemäß einer vorteilhaften Weiterbildung wird der Teil in ein nachfolgend zu sendendes Datenpaket mit derselben Kennung geschrieben. Zwar ist es möglich, dass Datenpakete mit derselben Kennung unmittelbar aufeinander folgen, dennoch können auch Datenpakete mit unterschiedlicher Kennung aufeinander folgen.

Gemäß einer vorteilhaften Weiterbildung wird durch den Master eine Nicht-Teilnahme eines Slaves an einer Buskommunikation auf dem Bus ermittelt. Die Nicht-Teilnahme kann beispielsweise mittels eines Zählerwertes und/oder einer Abfrage bestimmt werden. Bevorzugt wird durch den Master der dem ermittelten Slave zugehörige Teil der Empfangsdaten in die Sendedaten des Kanals geschrieben. Dabei kann der zugehörige Teil der Empfangsdaten ohne Abbruch fortlaufend in die Sendedaten des Kanals geschrieben werden. Alternativ wird der zugehörige Teil der Empfangsdaten bis zu einer Abbruchbedingung in die Sendedaten des Kanals geschrieben.

Eine Abbruchbedingung kann beispielsweise eine Änderung der Konfiguration sein oder eine Abbruchbedingung ist durch die Wiederaufnahme der Teilnahme des Slaves an der Buskommunikation gegeben oder die Abbruchbedingung wird durch eine Software auf dem Prozessor des Masters erzeugt. Wird beispielsweise ein Slave vom Bus entkoppelt, "gezogen", fehlt der Teil der Daten dieses Slaves in den Empfangsdaten. Der Master kann den letzt gültigen Teil der Empfangsdaten dieses Slaves durch die Rückspeisung in die Sendedaten weiterverwenden. Dieser Teil stellt zwar veraltete, jedoch zum entsprechenden Zeitpunkt gültige Daten dar.

Gemäß einer anderen vorteilhaften Weiterbildung werden die im ausgewählten Kanal gespeicherten Empfangsdaten für ein zu sendendes Datenpaket vollständig in die Sendedaten geschrieben. Hierdurch werden Daten innerhalb des Busses zirkuliert. Vorteilhafterweise nehmen zumindest zwei Slaves an der Kommunikation mittels der zirkulierenden Daten teil. Dabei erzeugt der Master für jede Zirkulation ein neues Datenpaket, wobei die Empfangsdaten des empfangenen Datenpakets vorzugsweise unverändert in die Sendedaten des nächsten Datenpakets übernommen werden. Hierdurch können Daten von einem beliebigen, am Bus angeschlossenen Slave zu einem anderen beliebigen am Bus angeschlossenen Slave in beliebiger Richtung übertragen werden. Vorzugsweise werden die Datenpakete der Zirkulation zyklisch übertragen.

Gemäß einer anderen vorteilhaften Weiterbildung werden die Sendedaten aus ersten Daten und den in den Empfangs-Speicherbereich geschriebenen Empfangsdaten mittels einer Selektionsschaltung des Masters ausgewählt. Dabei ist ein Eingang der Selektionsschaltung mit einem Empfangs-Speicherbereich des ausgewählten Kanals verbunden. Ein Ausgang der Selektionsschaltung ist mit der Transceiverschaltung verbunden, so dass die Sendedaten in ein zu sendendes Datenpaket ausgegeben werden. Vorteilhafterweise wird die Selektionsschaltung durch ein Steuersignal gesteuert.

Die Aufgabe wird weiterhin durch ein Bussystem mit den Merkmalen des Anspruchs 26 gelöst. Vorteilhafte Weiterbildungen sind in der Beschreibung enthalten.

Demzufolge ist ein Bussystem zur Prozesssteuerung mit einem Master und einem Slave vorgesehen.

Der Master ist eingerichtet, ein Datenpaket mit Sendedaten für die Prozesssteuerung zu erzeugen.

Der Master ist eingerichtet, die Sendedaten aus einem ausgewählten Kanal in einen Nutzdatenbereich des Datenpakets zu schreiben.

Jeder Kanal weist jeweils einen zugehörigen Speicherbereich für seine Sendedaten auf.

Der Master ist eingerichtet, eine zum ausgewählten Kanal zugehörige Kennung in das Datenpaket zu schreiben.

Der Master ist eingerichtet, das Datenpaket beinhaltend die Kennung und die Sendedaten an den Slave zu senden.

Der Slave ist eingerichtet, das Datenpaket zu empfangen. Der Slave ist eingerichtet, basierend der Kennung zumindest einen Teil der Sendedaten zu lesen und/oder zumindest einen Teil Empfangsdaten zu schreiben. Der Slave ist eingerichtet, das Datenpaket zurück an den Master zu senden.

Der Master ist eingerichtet, das Datenpaket zu empfangen.

Der Master ist eingerichtet, das empfangene Datenpaket basierend auf der Kennung dem ausgewählten Kanal zuzuordnen.

Der Master ist eingerichtet, die Empfangsdaten des empfangenen Datenpakets im ausgewählten Kanal zu speichern.

Unter einem Slave ist genau ein Slave oder mehrere Slaves zu verstehen. In einem sehr kleinen Bussystem kann ein Master mit einem einzigen Slave verbunden sein. In einem gängigen Bussystem sind häufig mehrere Slaves über den Bus miteinander und mit dem Master verbunden. Beispielsweise sind der Master und die Slaves in einer Ringstruktur verbunden. Unter einem Datenpaket sind genau ein Datenpaket oder mehrere aufeinander folgende Datenpakete zu verstehen. So können beispielsweise eine Vielzahl von Datenpaketen nacheinander über den Bus des Bussystems übertragen werden.

Die Erfindung ist dabei nicht auf die zuvor erläuterten Weiterbildungen begrenzt. So können die Weiterbildungen miteinander kombiniert werden. Vorteilhafte Ausgestaltungen der Erfindung sind in der Figurenbeschreibung erläutert.

Dabei zeigen in unterschiedlichen Ausführungsbeispielen:
- Fig. 1: einen schematischen Blockschaltplan eines Bussystems;
- Fig. 2: einen schematischen Blockschaltplan eines Masters eines Bussystems;
- Fig. 3: einen schematischen Blockschaltplan eines Kanals eines Masters;
- Fig. 4: einen schematischen Blockschaltplan eines weiteren Kanals eines Masters; und
- Fig. 5: eine schematische Darstellung von Datenpaketen in einem Bussystem; und
- Fig. 6: einen schematischen Blockschaltplan eines Masters.

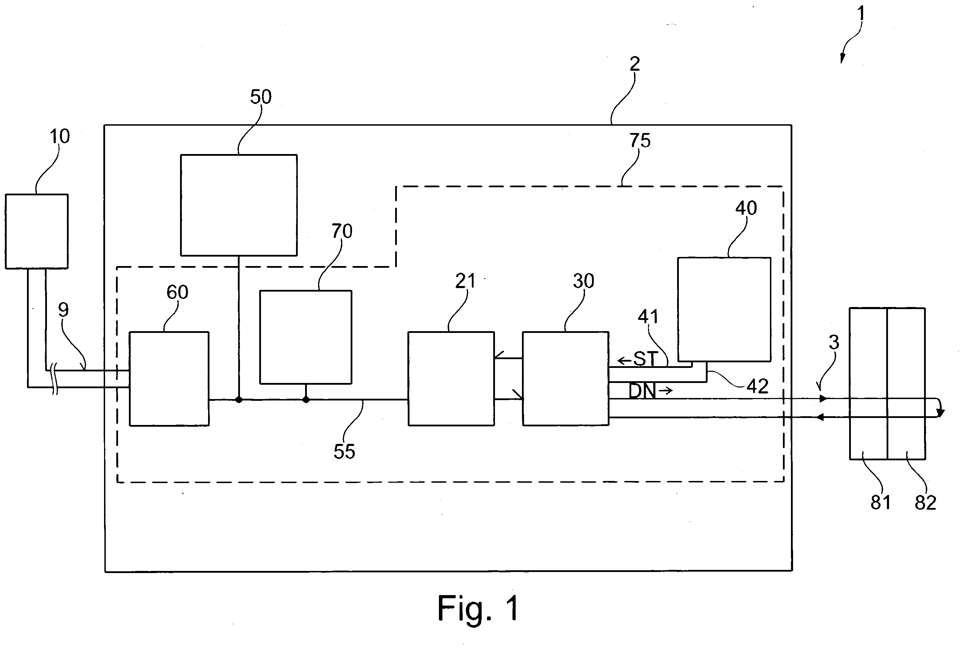

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Master, Slave Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 10 auf, die beispielsweise mit einer speicherprogrammierbaren Steuerung, SPS, realisiert werden kann. Eine derartige übergeordnete Steuerung 10 kann auch als Leitstelle bezeichnet werden. Eine derartige SPS 10 dient zur Steuerung und Regelung des von der Automatisierungsanlage ausgeführten Prozesses.

Zur Steuerung des Prozesses der Automatisierungsanlage ist die SPS 10 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 10 mittels eines übergeordneten Busses 9, der in dem hier gezeigten Ausführungsbeispiel ein Feldbus sein kann, mit einem Master 2 eines untergeordneten Bussystems 1 verbunden. Entsprechend kann der Master 2 auch als Lokalbusmaster und das untergeordnete Bussystem 1 als Lokalbussystem bezeichnet werden. Abweichend von dem Ausführungsbeispiel der Figur 1 kann anstelle der SPS 10 die Steuerung und Regelung des von der Automatisierungsanlage ausgeführten Prozesses durch eine Recheneinheit 50 des Masters 2 durchgeführt werden. Die Recheneinheit 50 des Masters 2 ist beispielsweise als Prozessor ausgebildet.

Der übergeordnete Bus 9 ist in dem hier gezeigten Ausführungsbeispiel der Figur 1 mit dem Lokalbusmaster 2 verbunden. Hierzu weist der Lokalbusmaster 2 eine erste Schnittstelle auf, die mit dem übergeordneten Bus 9 verbunden werden kann. Der Lokalbusmaster 2 in dem Ausführungsbeispiel der Figur 1 weist eine weitere zweite Schnittstelle auf, um den Lokalbusmaster 2 mit dem Lokalbus 3 zu verbinden. An den Lokalbus 3 sind Slaves 81, 82 angeschlossen. Diese Slaves 81, 82 können auch als Datenbusteilnehmer 81, 82 bezeichnet werden.

Der Bus 3 ist vorteilhafterweise derart ausgebildet, dass ein vom Master 2 gesendetes Datenpaket durch alle mit dem Bus 3 verbundenen Slaves 81, 82 und an den Master 3 zurück übertragen wird. Dabei empfängt ein Slave 82 von seinem vorgelagerten Slave 81 immer nur einen Teil des Datenpakets. Nach einer Zeitspanne in der die in diesem Teil enthaltenen Daten vom Slave 81 verarbeitet werden können, wird der Teil an den nachgelagerten Slave 82 weitergeleitet und gleichzeitig wird von dem Master 2 ein neuer Teil des Datenpakets empfangen. Auf diese Weise passieren alle Teile des Datenpakets sequentiell alle Slaves 81, 82. Der Bus 3 ist vorteilhafterweise in einer ringförmigen Struktur ausgebildet. Derartige Lokalbusse können auch als Ringbus bezeichnet werden. Der Bus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Masters 3 bewerkstelligt. In dem hier gezeigten Ausführungsbeispiel weist die zweite Schnittstelle eine Abwärts- und eine Aufwärtsverbindung auf.

Die Datensenderichtung im Ringbus 3 ist mit Pfeilen in dem in Figur 1 gezeigten Ausführungsbeispiel dargestellt. In dem Ausführungsbeispiel der Figur 1 werden die Busverbindungen mit Hilfe von Kabeln oder Leiterplatten zur direkten oder indirekten Kontaktierung mittels elektrischer Kontakte realisiert. Alternativ ist eine drahtlose, optische Verbindung oder Funkverbindung möglich. Im Ausführungsbeispiel der Figur 1 weisen der Master 2 und die Slaves 81, 82 am Gehäuse elektrische Kontakte (nicht dargestellt) für den Bus 3 auf. Zur einfachen Aneinanderreihung des Master 2 und der Slaves 81, 82 können diese auch auf einer gemeinsamen Aufnahme, zum Beispiel einer Hutschiene angeordnet werden.

Zur leichten Erfassung sind in dem Ausführungsbeispiel der Figur 1 die Slaves 81, 82 sehr vereinfacht dargestellt und können beispielsweise einen analogen oder digitalen Eingang und/oder einem analogen oder digitalen Ausgang aufweisen (nicht gezeigt), um Sensoren oder Aktoren für die Prozesssteuerung anschließen zu können. Die Slaves 81, 82 können modular aufgebaut sein, so dass während des Betriebs ein Slave 81 aus dem Bussystem 1 entnommen oder hinzugefügt werden kann. Die Ringbusinfrastruktur wird dabei durch Moduleinheiten aufgebaut und die Slaves 81, 82 sind auswechselbar, so dass der Ringbus 3 mit beliebigen Slavetypen und eine gewünschten Anzahl von Slaves 81, 82 aufgebaut werden kann. Mit Hilfe der Modularität ist auch sichergestellt, dass auch wenn ein Slave z.B. 81 entfernt wird, die Kommunikation zwischen den restlichen Datenbusteilnehmern 82 und dem Master 2 nicht unterbrochen wird, weil die Kommunikation über die verbliebenden Moduleinheiten geschieht. Dies wird auch als HotSwapping bezeichnet. Die Module werden häufig auch als E/A Module bezeichnet.

Figur 1 zeigt ein Blockdiagramm eines Ausführungsbeispiels mit einem Master 3. Der Master 3 ist mit dem übergeordneten Feldbus 9 verbunden. Zur Verarbeitung der über die Feldbusschnittstelle empfangenen Datenströme beziehungsweise zu sendenden Datenströme weist der Master 3 eine Schaltung 60 auf, die als Feldbus-Schnittstellenschaltung 60 oder auch als Verarbeitungseinheit oder Feldbuscore (FBC) bezeichnet werden kann. Übernimmt der Prozessor 50 des Masters 2 die Prozesssteuerung, so kann der FBC 60 ungenutzt bleiben oder es kann auf den FBC 60 und die SPS 10 verzichtet werden.

Der FBC 60 und der Prozessor 50 sind über einen Parallelbus 55 mit einer Datenverwaltungseinheit 70 und einem Kanal 21 verbunden. Der Parallelbus 55 ist beispielsweise ein 32-bit breiter Parallelbus. Die Verbindung 55 kann alternativ auch jede andere Verbindung sein, die einen Datentransfer zwischen den Einheiten erlaubt. Im Ausführungsbeispiel der Figur 1 ist der Prozessor 50 eingerichtet, den FBC 60, die Datenverwaltungseinheit 70 und den Kanal 21 zu konfigurieren.

Die Datenverwaltungseinheit 70 ist eingerichtet, Daten in den Kanal 21 zu transferieren, um die Daten auf den Ringbus 3 in zumindest einem Datenpaket zu senden. Die Daten können dabei Prozessdaten sein, die über den Feldbus 9 in Feldbustelegrammen vom FBC 60 empfangen wurden. Alternativ könnten die Daten auch Prozessdaten sein, die vom Prozessor 50 erzeugt wurden.

Der Master 2 weist eine Transceiverschaltung 30 auf, die eingerichtet ist, buskonforme Datenpakete zur Datenübertragung auf dem Bus 3 zu erzeugen und die von Kanal 21 erhaltenen Daten in das entsprechende Datenpaket einzufügen. Weiterhin ist die Transceiverschaltung 30 eingerichtet, über den Bus 3 zurückgesendete Datenpakete zu empfangen. In den empfangenden Datenpaketen enthaltene Daten werden durch die Transceiverschaltung 30 in den Kanal 21 geschrieben. Vom Kanal 21 können diese Daten über den Parallelbus 55 mittels der Datenverwaltungseinheit 70 dem FBC 60 und/oder dem Prozessor 50 zur weiteren Verarbeitung eingegeben werden.

Der Master 2 weist zudem eine Steuerschaltung 40 zur Steuerung der Transceiverschaltung 30 auf. Die Steuerung erfolgt dabei parallel zu einem Programmablauf im Prozessor 50 und ist vom Prozessor 50 weitgehend unabhängig. Die Steuerschaltung 40 kann auch als Zyklusrahmengenerator bezeichnet werden, wobei die Steuerschaltung 40 die Transceiverschaltung 30 für die Erzeugung eines Zyklusrahmens ansteuert. Weiterhin ist die Steuerschaltung 40 eingerichtet, die Transceiverschaltung 30 zur Erzeugung eines Datenpakets anzusteuern. Die Transceiverschaltung 30 startet das Senden eines Datenpakets, wenn von der Steuerschaltung 40 das Steuersignal St über die Verbindung 41 an die Transceiverschaltung 30 angelegt wird. Beispielsweise werden mittels des Steuersignals ST ein Startpuls, eine Kennung ILI und die Länge des Datenpakets an die Transceiverschaltung 30 übertragen. Die Kennung ILI kann auch als Index bezeichnet werden. Nach dem Senden des Datenpakets informiert die Transceiverschaltung 30 die Steuerschaltung 40 über das Ende mittels eines Bestätigungssignals DN via die Verbindung 42.

Schaltungen 21, 30, 40, 60, 70 des Masters 2 sind vorzugsweise auf einem Halbleiterchip 75 implementiert. Der Halbleiterchip kann beispielsweise als ASIC oder FPGA ausgebildet sein. Vorzugsweise sind die Schaltungen 21, 30, 40, 60, 70 vom Prozessor 50 getrennt, so dass zumindest die Transceiverschaltung 30 und der Kanal 21 unabhängig von einem Programmablauf auf dem Prozessor 50 betrieben werden können.

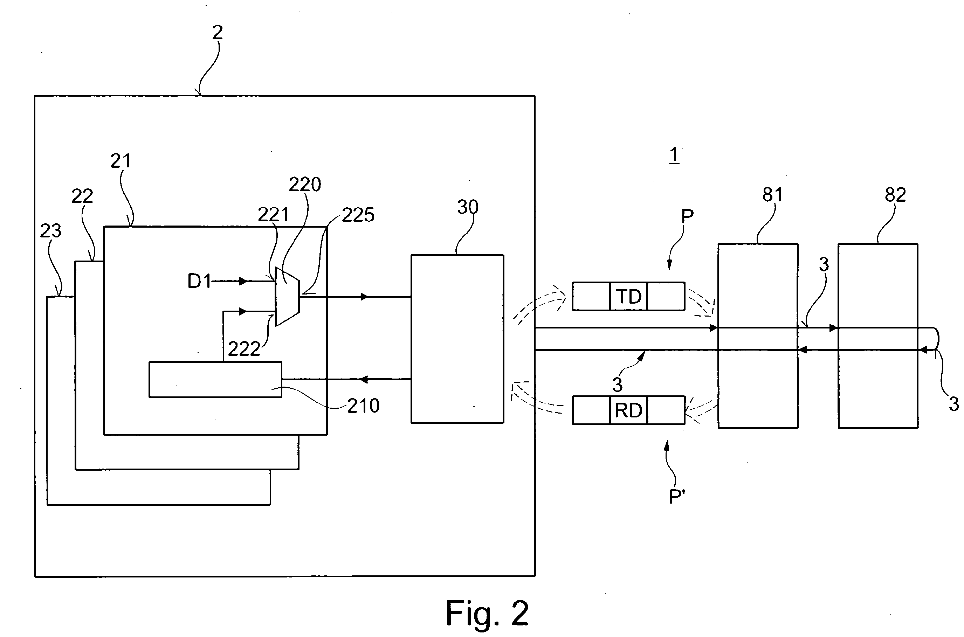

In Figur 2 ist ein Ausführungsbeispiel eines Masters 2 als Blockschaltbild schematisch dargestellt. Sie zeigt einen Master 2 eines Bussystems 1 zur Prozesssteuerung. Das Bussystem 1 hat weiterhin einen Bus 3 und einen ersten Slave 81 und einen zweiten Slave 82. Dem Fachmann ist dabei bekannt, dass je nach Umfang der Prozesssteuerung eine andere Anzahl von Slaves erforderlich sein kann. Schematisch dargestellt ist ebenfalls ein Datenpaket P, das von einer Transceiverschaltung 30 des Masters 2 erzeugt und gesendet wird. Die Transceiverschaltung ist eingerichtet, zum Senden von Sendedaten TD und Empfangen von Empfangsdaten RD für die Prozesssteuerung mittels Datenpakete P, P'. Die Transceiverschaltung 30 ist eingerichtet, das zu sendende Datenpaket P mit einem Kopf und einem Datenbereich zu erzeugen. Das gesendete Datenpaket P wird über den Bus 3 an die Slaves 81, 82 übertragen und zurück an die Transceiverschaltung 30 des Masters 2 gesendet. Das von der Transceiverschaltung 30 empfangene Datenpaket P' ist dabei ursprünglich ebenfalls von der Transceiverschaltung 30 erzeugt worden. Hingegen erzeugen die Slaves 81, 82 keine Datenpakete.

Das von der Transceiverschaltung 30 gesendete Datenpaket P enthält Sendedaten TD. Das von der Transceiverschaltung 30 empfangene Datenpaket P' enthält Empfangsdaten RD. Daten im Datenpaket P können von den Slaves 81, 82 verändert werden. Entsprechend sind die Sendedaten TD und die Empfangsdaten RD gleich oder unterschiedlich. Beide, Sendedaten TD und Empfangsdaten RD können für die Prozesssteuerung erforderlich sein. Die Transceiverschaltung 30 ist eingerichtet, das Datenpaket P' mit einem Kopf und einem Datenbereich über den Bus 3 zu empfangen und die Empfangsdaten RD aus dem Datenbereich PL des empfangenen Datenpakets P' zu lesen.

Der Master 2 weist einen Kanal 21 auf, der mit der Transceiverschaltung 30 verbunden ist. Im Ausführungsbeispiel der Figur 2 ist dargestellt, dass der Master 2 noch weitere Kanäle 22, 23 aufweisen kann. Der. Master 2 ist eingerichtet, die Sendedaten TD aus einem der Kanäle 21, 22, 23 auszuwählen und die Sendedaten TD aus dem ausgewählten Kanal 21, 22, 23 in einen Nutzdatenbereich des Datenpakets P zu schreiben. Jeder Kanal 21, 22, 23 weist einen zugehörigen Speicherbereich 210, 230 für seine Sendedaten TD auf. Es können in dem Master 2 also zeitgleich Sendedaten TD unterschiedlicher Kanäle parallel gespeichert sein. Hierdurch kann das Bussystem 1 besonders flexibel genutzt werden. Beispielsweise ist eine Umkonfiguration im laufenden Betrieb möglich.

Im Ausführungsbeispiel der Figur 2 weist jeder Kanal 21, 22, 23 einen Empfangs-Speicherbereich 210 auf, wobei in der Figur 2 nur der Empfangs-Speicherbereich 210 des Kanals 21 schematisch dargestellt ist. Der Empfangs-Speicherbereich 210 weist mindestens eine entsprechende Größe auf, um alle Empfangsdaten RD des empfangenen Datenpaket P' zeitgleich zu speichern. Hierdurch wird der Vorteil erzielt, dass die Empfangsdaten RD für ein oder mehrere später zu sendende Datenpakete zur Verfügung stehen. Die Empfangsdaten RD eines Datenpakets bleiben dabei vollständig zumindest bis zum Empfangs eines nachfolgenden Datenpakets erhalten.

Die Transceiverschaltung 30 ist eingerichtet, die Empfangsdaten RD des über den Bus 3 empfangenen Datenpakets P' in den Empfangs-Speicherbereich 210 des zugehörigen Kanals 21, 22, 23 zu schreiben. Mit jedem Kanal 21, 22, 23 kann ein anderes Datenpaket P gesendet werden. Dazu ist im Ausführungsbeispiel der Figur 2 die Transceiverschaltung 30 eingerichtet, unterschiedliche, zu sendendes Datenpakete P jeweils mit einem Kopf und einem Datenbereich zu erzeugen.

Die Slaves 81, 82 sind eingerichtet, die unterschiedlichen Datenpakete zu unterscheiden. Im Ausführungsbeispiel der Figur 2 ist der Master 2 eingerichtet, eine zum ausgewählten Kanal 21, 22, 23 zugehörige Kennung in das Datenpaket P zu schreiben und das Datenpaket P beinhaltend die Kennung und die Sendedaten TD an die Slave 81, 82 zu senden. Die Slaves 81, 82 sind eingerichtet, das Datenpaket P zu empfangen. Jeder Slave 81, 82 liest einen Teil der Sendedaten TD des Masters 2 oder liest keine Sendedaten TD, wenn beispielsweise die Sendedaten TD nicht für den Slave 81 vorgesehen sind. Jeder Slave 81, 82 schreibt einen Teil der Empfangsdaten RD an den Master 2 oder schreibt keine Empfangsdaten RD, wenn beispielweise keine Daten an den Master 2 zu richten sind. Das Datenpaket P' wird vom letzten Slave 82 in der Reiihenfolge wieder zurück an den Master 2 gesendet und vom Master 2 empfangen.

Der Master 2 ist eingerichtet, das empfangene Datenpaket P' basierend auf der Kennung dem ausgewählten Kanal 21, 22, 23 wieder zuzuordnen und die Empfangsdaten RD des empfangenen Datenpakets P' im ausgewählten Kanal 21, 22, 23 zu speichern. Ein Kanal 21, 22, 23 im Sinne des Ausführungsbeispiels der Figur 2 ist eine Hardwareschaltung, die einem bestimmten logischen Kanal der Übertragung über den Bus 3 zugehörig ist. Entsprechend ist mit Kanal 21, 22, 23 nicht der physikalische Übertragungskanal gemeint.

Der Kanal 21 des Masters 2 im Ausführungsbeispiel der Figur 2 weist zumindest einen Empfangs-Speicherbereich 210 auf. Die Transceiverschaltung 30 ist eingerichtet, die Empfangsdaten RD des über den Bus 3 empfangenen Datenpakets P' in den Empfangs-Speicherbereich 210 zu schreiben. Zum Empfang des Datenpakets P' prüft die Transceiverschaltung 30 fortlaufend den Signalstrom, der vom ersten Slave 81 gesendet wird. Der Inhalt des Datenfelds mit den Empfangsdaten RD wird aus dem Datenpaket P' in den ersten Kanal 21 geschrieben, wenn das Datenpaket P' dem ersten Kanal 21 logisch zugeordnet ist.

Der Kanal 21 des Masters 2 weist im Ausführungsbeispiel der Figur 2 zumindest eine Selektionsschaltung 220 auf. Die Selektionsschaltung 220 hat die Funktion zwischen unterschiedlichen Eingängen 221, 222 anliegenden Daten zu selektieren und die selektierten Daten an einem Ausgang 225 auszugeben. Ein Ausgang 225 der Selektionsschaltung 220 ist im Ausführungsbeispiel der Figur 2 mit der Transceiverschaltung 30 verbunden. Die Eingänge 221, 222 und der Ausgang 225 können beispielweise durch Hardware gebildet sein, beispielweise durch Eingänge 221, 222 den Ausgang 225 eines Multiplexers. Alternativ können die Eingänge 221, 222 und der Ausgang 225 durch eine Adressierung gebildet sein. Entsprechend können selektierte Daten an die Transceiverschaltung 30 von der Selektionsschaltung 220 ausgegeben werden.

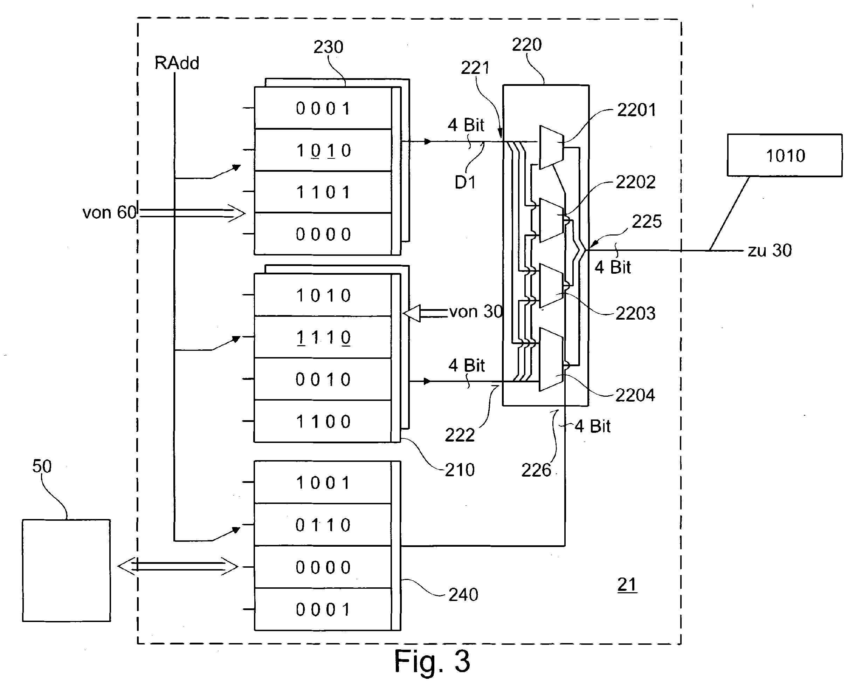

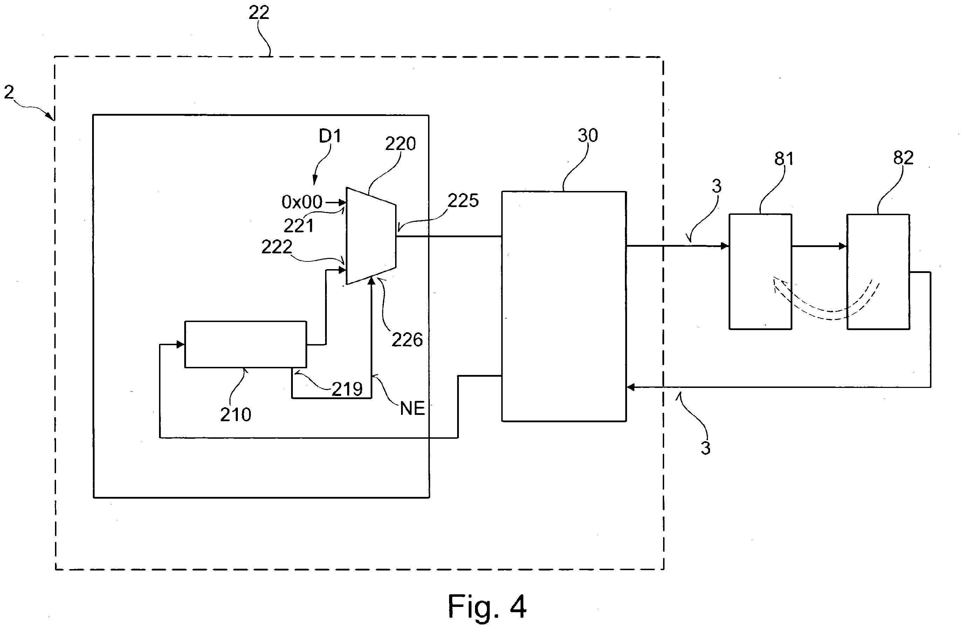

Im Ausführungsbeispiel der Figur 2 weist die Selektionsschaltung 220 einen ersten Eingang 221 zur Auswahl erster Daten D1 auf. Die ersten Daten D1 können je nach Ausführungsbeispiel einen unterschiedlichen Ursprung haben. Jedoch werden die ersten Daten D1 nicht aus den Empfangsdaten RD gewonnen. Beispielsweise werden die ersten Daten D1 vom Prozessor 50, einem Mikrocontroller des Masters 2 erzeugt. Andere Ursprünge der ersten Daten D1 sind in den anderen Ausführungsbeispielen in den Figuren 3 und 4 gezeigt.

Im Ausführungsbeispiel der Figur 2 weist die Selektionsschaltung 220 einen zweiten Eingang 222 auf. Der zweite Eingang 222 der Selektionsschaltung 220 ist mit dem Empfangs-Speicherbereich 210 verbunden. Vorteilhafterweise ist die Verbindung zwischen dem Empfangs-Speicherbereich 210 und dem zweiten Eingang 222 zur direkten Übertragung der Empfangsdaten RD ausgebildet. Die direkte Verbindung ist beispielweise mittels direkter Verbindungsleitungen in einem FPGA realisiert. Alternativ kann die direkte Verbindung für die direkte Übertragung durch eine Kopiermaschine, beispielweise einem DMA-Controller, beispielweise durch einen Zustandsautomaten gesteuert erfolgen. In allen Fällen ist ein Prozessor, wie eine CPU, für die Übertragung nicht erforderlich, so dass ein Programm in einem Prozessor durch die Übertragung nicht unterbrochen wird und keine Prozessorresourcen benötigt.

Die Empfangsdaten RD können im Empfangs-Speicherbereich 210 durch die Selektionsschaltung 220 ausgewählt werden. Im Ausführungsbeispiel der Figur 2 ist die Selektionsschaltung 220 eingerichtet, die Sendedaten TD aus den ersten Daten D1 und den in den Empfangs-Speicherbereich 210 geschriebenen Empfangsdaten RD auszuwählen. Die Selektionsschaltung 220 ist eingerichtet, die Sendedaten TD in die Transceiverschaltung 30 für ein zu sendendes Datenpaket P auszugeben. Die Transceiverschaltung 30 erzeugt das Datenpaket P und ist eingerichtet, mit Erzeugung des zu sendenden Datenpakets P die Sendedaten TD in den Datenbereich des zu sendenden Datenpakets P zu schreiben. Im Ausführungsbeispiel der Figur 2 gelangt jedes gesendete Datenpaket P über den Bus 3 zu den Slaves 81, 82 und zurück zum Master 2 und wird dort als Datenpaket P' nun jedoch mit den Empfangsdaten RD empfangen.

Im Ausführungsbeispiel der Figur 2 ist die Selektionsschaltung 220 mittels des Symbols eines Multiplexers schematisch dargestellt. Dabei ist dem Fachmann klar, dass die Funktion der Selektionsschaltung 220 nicht nur durch einen Multiplexer, sondern auch durch eine gleichwirkende Gatterlogik oder durch eine gleichwirkende Speicheradressierung realisiert werden kann.

Die Slaves 81, 82 im Ausführungsbeispiel der Figur 2 sind für einen Wechsel, also ein Entfernen oder Hinzufügen im laufenden Betrieb des Bussystems 1 eingerichtet. Nimmt ein Slave 81 an der Kommunikation auf dem Bus 3 teil, so wird er die ihm zugeordneten Daten in den Sendedaten TD des Datenpakets P ändern, so dass das vom Master 2 empfangene Datenpaket P' in den Empfangsdaten RD die vom Slave 81 geänderten Daten enthält. Nimmt der Slave 81 hingegen an der Kommunikation auf dem Bus 3 nicht teil, weil beispielsweise der Slave ausfällt oder aus dem Bus 3 gezogen wird, so kann er keine Änderung der Daten im Datenpaket P mehr bewirken. Entsprechend würde der Slave 81 das Datenpaket P nicht prozessieren, also die ihm zugeordneten Daten nicht überschreiben. Figur 3 zeigt zu dieser Thematik ein Ausführungsbeispiel.

In Figur 3 ist ein Kanal 21 eines Masters 2 schematisch dargestellt. Der Kanal 21 in Figur 3 weist einen Empfangs-Speicherbereich 210 und eine Selektionsschaltung 220 auf. Der Empfangs-Speicherbereich 210 und die Selektionsschaltung 220 sind mit einem Transceiver 30 (nicht dargestellt) verbunden. Der Kanal 21 weist zur Speicherung der ersten Daten D1 einen Sende-Speicherbereich 230 auf. Weiterhin weist der Kanal 21 einen Steuer-Speicherbereich 240 auf. Der Empfangs-Speicherbereich 210 und/oder der Sende-Speicherbereich 230 sind beispielsweise als Teil eines Gesamtspeichers eines Halbleiterchips ausgebildet. Vorteilhafterweise weisen der Empfangs-Speicherbereich 210 und/oder der Sende-Speicherbereich 230 eine FIFO-Funktionalität auf. Der Empfangs-Speicherbereich 210 und/oder der Sende-Speicherbereich 230 sind beispielsweise als Buffer ausgebildet.

Die ersten Daten D1 im Sende-Speicherbereich 230 sind beispielsweise Prozessdaten, die von einem Feldbus stammen. Entsprechend ist im Ausführungsbeispiel der Figur 3 der Sende-Speicherbereich 230 ggf. über weitere Schaltungen und Verbindungen des Masters 2 mit einer Feldbus-Schnittstellenschaltung 60 verbunden. Die Feldbus-Schnittstellenschaltung 60 ist beispielsweise in Figur 1 schematisch dargestellt. Die Feldbus-Schnittstellenschaltung 60 ist im Ausführungsbeispiel der Figur 3 mit dem Sende-Speicherbereich 230 des Kanals 21 verbunden zum Eingeben von über einen Feldbus 9 empfangenen Prozessdaten als die ersten Daten D1 in den Sende-Speicherbereich 230. In einer anderen Ausgestaltung - alternativ zur Darstellung in Figur 3 - können die ersten Daten D1 auch von dem Prozessor 50 des Masters 2 stammen.

Im Ausführungsbeispiel der Figur 3 ist die Selektionsschaltung 220 zur bitgranularen Auswahl eingerichtet. Damit eine bitgranulare Auswahl erfolgen kann, sind mittels der Selektionsschaltung 220 Sende-Bits der Sendedaten TD aus Bits der ersten Daten D1 und Bits der Empfangsdaten RD bitweise zusammengesetzt. Im Ausführungsbeispiel der Figur 3 ist eine Bitbreite von 4 Bit dargestellt. Dem Fachmann ist aber bewusst, dass Bitbreiten von beispielsweise 8, 16 oder 32 Bit vorgesehen sein können, um parallel eine entsprechende Anzahl Bits zu selektieren. Entsprechend weist der erste Eingang 221 der Selektionsschaltung 220 für die ersten Daten D1 eine Bitbreite von mehreren Bits - hier von 4 Bits - auf. Auch der zweite Eingang 222 der Selektionsschaltung 220 weist eine identische Bitbreite auf.

In dem Ausführungsbeispiel der Figur 3 weist die Selektionsschaltung 220 für jedes der mehreren Bits ein Schaltelement 2201, 2202, 2203, 2204 auf. Das Schaltelement 2201, 2202, 2203, 2204 für jedes Bit ist im einfachsten Fall ein Umschalter. Die Selektionsschaltung 220 ist derart eingerichtet, dass die Schaltelemente 2201, 2202, 2203, 2204 unabhängig voneinander ansteuerbar sind. Im Ausführungsbeispiel der Figur 3 weist die Selektionsschaltung 220 einen 4 Bit breiten Steuereingang 226 auf. Der Kanal 21 weist vorteilhafterweise einen Steuer-Speicherbereich 240 auf mit Steuerwerten zur Steuerung der Selektionsschaltung 220. Die Steuerwerte liegen dabei am Steuereingang 226 der Selektionsschaltung 220 an. Um die Ausgabe der ersten Daten D1 aus dem Sende-Speicherbereich 230 und den Empfangsdaten RD und den Steuerwerten aus dem Steuer-Speicherbereich 240 zu synchronisieren, ist im Ausführungsbeispiel der Figur 3 eine Adressierung vorgesehen. Mittels der Adresse *RAdd* werden jeweils die zueinander zugehörigen Speicherzellen zeitgleich ausgelesen. In der beispielhaften Darstellung der Figur 3 sind Daten und Steuerwerte in allen zweiten Zeilen einander zugehörig. Dies ist schematisch durch die Zeiger der Adresse *RAdd* dargestellt. Entsprechend der momentanen adressierten Steuerwerte werden durch die beiden Einsen 1 1 der Steuerwerte die mittleren Bits 0 und 1 der ersten Daten D1 und die äußeren beiden Bit 1 und 0 der Empfangsdaten RD ausgewählt. Das Selektionsergebnis ist entsprechend 1 0 1 0 und am Ausgang 225 der Selektionsschaltung 220 schematisch dargestellt. Vorteilhafterweise ist der Prozessor 50 des Masters 2 mit dem Steuer-Speicherbereich 240 verbunden, wobei der Prozessor 50 eingerichtet ist, die Steuerwerte im Steuer-Speicherbereich 240 zu programmieren.

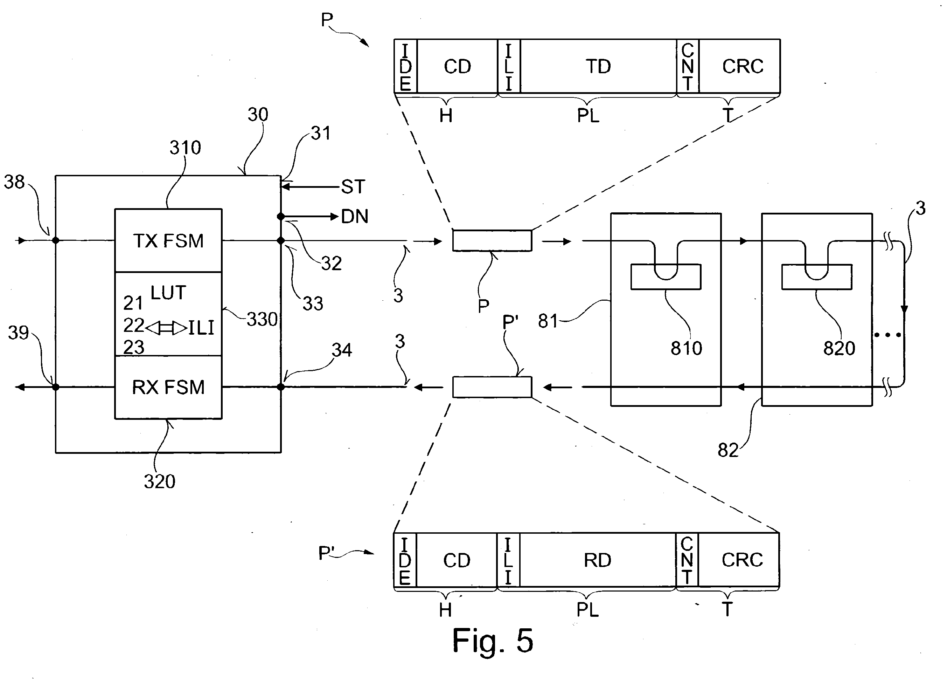

Gemäß dem Ausführungsbeispiel der Figur 3 ist vorteilhafterweise ein Verfahren zum Betrieb des in Figur 1 dargestellten Bussystems 1 vorgesehen. In einem ersten Schritt wird von der Transceiverschaltung 30 des Masters 2 ein Datenpaket P mit Sendedaten TD für die Prozesssteuerung erzeugt. In einem folgenden Schritt werden durch den Master 2 die Sendedaten TD aus einem ausgewählten Kanal 21 in einen Nutzdatenbereich des Datenpakets P geschrieben. Hierzu werden beispielsweise abweichend von der Darstellung in Figur 3 zunächst ausschließlich die ersten Daten D1 aus dem Sende-Speicherbereich 230 durch die Selektionsschaltung ausgewählt. Da noch weitere Kanäle 22, 23 vorgesehen sein können, wird in einem folgenden Schritt durch den Master 2 eine zum ausgewählten Kanal 21 zugehörige Kennung ILI (vergl. Figur 5) in das Datenpaket P geschrieben. Die Kennung ILI kann auch als Index bezeichnet werden. Die Kennung ermöglicht sowohl dem Master 2 als auch den Slaves 81, 82 eine einfache Zuordnung.

In einem folgenden Schritt wird durch die Transceiverschaltung 30 des Masters 2 das Datenpaket P beinhaltend die Kennung ILI und die Sendedaten TD an den Slave 81, 82 gesendet. Hat das Datenpaket P alle Slaves 81, 82 passiert, wird das an den Slave 81, 82 gesendete Datenpaket P zurück an den Master 2 übertragen und von der Transceiverschaltung 30 wird das Datenpaket P' empfangen. In einem folgenden Schritt wird durch die Transceiverschaltung 30 des Masters 2 das empfangende Datenpaket P' basierend auf der Kennung ILI dem ausgewählten Kanal 21 zugeordnet. Dabei werden durch die Transceiverschaltung 30 die Empfangsdaten RD des empfangenden Datenpakets P' im ausgewählten Kanal 21 gespeichert.

Vorteilhafterweise ist der Master 2 eingerichtet eine Nicht-Teilnahme eines Slaves z.B. 81 an einer Buskommunikation auf dem Bus 3 zu ermitteln. Beispielsweise stimmt die Zahl gezählter Slaves nicht mit einer erwarteten Zahl von Slaves überein. Hierdurch wird besonders einfach durch den Master 2 eine Nicht-Teilnahme eines Slaves 81 an der Buskommunikation auf dem Bus 3 ermittelt. Diese Auswertung kann beispielsweise durch den Prozessor 50 erfolgen. Durch Abfragen über den Bus 3 kann herausgefunden werden, dass genau der Slave 81 nicht mehr an der Buskommunikation teilnimmt. In einem folgenden Schritt wird durch den Master 2 ein dem ermittelten Slave 81 zugehöriger Teil der Empfangsdaten RD in die Sendedaten TD des Kanals 21 geschrieben. Hierzu schreibt der Prozessor 50 die entsprechenden Steuerwerte in den Steuer-Speicherbereich 240. Dabei werden die zuletzt gültig von dem nicht mehr an der Kommunikation teilnehmenden Slave 81 empfangenen Daten aus den Empfangsdaten RD in die Sendedaten TD übernommen. Dies bewirkt, dass die vom Slave 81 als letztes gültig empfangenen Datenwerte eingefroren werden. Dies wird auch als "Halte-Letzten-Wert"-Funktion (engl. Hold Last Value) bezeichnet. Dies hat den Vorteil, dass nur gültige Werte verwendet werden, die zwar veraltet sind, jedoch keine Instabilität des Prozesses verursachen können. Hingegen können Standard-Default-Werte signifikant vom letzt gültigen Wert abweichen, wodurch signifikante Unstetigkeiten im System auftauchen können. Zudem weist die Lösung gemäß dem Ausführungsbeispiel der Figur 3 den Vorteil auf, dass bei Wiederaufnahme der Kommunikation durch z.B. zuvor gezogenen und nun wieder gesteckten Slave 81 nahtlos wieder aktuelle Werte übertragen werden, so dass der Prozess ununterbrochen fortgesetzt werden kann.

In Figur 4 ist ein Ausführungsbeispiel eines Masters 2 als Blockschaltbild schematisch dargestellt. Ebenfalls gezeigt sind ein Bus 3 und ein erster Slave 81 und ein zweiter Slave 82. Der Master 2 weist eine Transceiverschaltung 30 und einen Kanal 22 auf. Der Kanal 22 weist eine Selektionsschaltung 220 und einen Empfangs-Speicherbereich 210 auf. Die ersten Daten D1 des Kanals 22 liegen als feste Daten am ersten Eingang 221 der Selektionsschaltung 220 an. Die ersten Daten D1 werden im Ausführungsbeispiel der Figur 4 durch Anschlüsse an High-Potential und/oder Low-Potential gebildet. Als Beispiel ist in Figur 4 gezeigt, das die ersten Daten D1 Nullwerte sind. In einem anderen Ausführungsbeispiel alternativ zur Darstellung in Figur 4 sind die ersten Daten D1 durch Programmierung, insbesondere eines nichtflüchtigen Speicherbereichs, festgelegt.

Der Empfangs-Speicherbereich 210 weist einen Steuerausgang 219 zur Ausgabe eines Steuersignals NE zur Steuerung der Selektionsschaltung 220 auf. Dabei ist der Steuerausgang 219 des Empfangs-Speicherbereichs 210 mit einem Steuereingang 226 der Selektionsschaltung 220 verbunden. Der Empfangs-Speicherbereich 210 ist eingerichtet, einen Wert des Steuersignals NE basierend auf dem Empfang der Empfangsdaten RD an den Steuereingang 226 der Selektionsschaltung 220 anzulegen. Ist beispielsweise der Empfangs-Speicherbereich 210 leer, da noch kein gültiges Datenpaket P' empfangen wurde, so entspricht der Wert des Steuersignals NE einer Auswahl ausschließlich der festen ersten Daten D1 durch die Selektionsschaltung 220. Wurde hingegen bereits ein gültiges Datenpaket P' empfangen, so entspricht der Wert des Steuersignals NE einer Auswahl ausschließlich der Empfangsdaten RD durch die Selektionsschaltung 220. Durch die festen ersten Daten D1 kann dabei ein definierter Ausgangszustand erzielt werden, undefinierte Kommunikation wird vermieden.

Durch die Ausgestaltung gemäß Figur 4 kann eine vorteilhafte Slave zu Slave Kommunikation erreicht werden. Im Ausführungsbeispiel der Figur 4 ist dabei der Kanal 22 für die Slave zu Slave Kommunikation eingerichtet. In einem Verfahren der Slave zu Slave Kommunikation werden vorteilhafterweise die im Folgenden erläuterten Verfahrensschritte durchgeführt.

In einem ersten Schritt wird die Transceiverschaltung 30 von der Steuerschaltung 40 angesteuert, um ein Datenpaket P zugehörig zum Kanal 22 zu erzeugen. Da der Empfangs-Speicherbereich 210 noch leer ist, werden durch die Selektionsschaltung 220 die festen ersten Daten D1 - z.B. ausschließlich Nullen - in den Nutzdatenbereich des Datenpakets P geschrieben. Dieses erste Datenpaket P wird über den Bus 3 zu den Slaves 81, 82 gesendet.

Sollen beispielsweise vom zweiten Slave 82 Daten an den ersten Slave 81 übertragen werden, so wird der zweite Slave 82 diese zu übertragenden Daten in das Datenpaket P schreiben.

Danach wird durch die Transceiverschaltung das Datenpaket P' empfangen und die Empfangsdaten RD werden durch die Transceiverschaltung 30 in den Empfangs-Speicherbereich 210 geschrieben. Für ein nachfolgend zu sendendes Datenpaket P werden die im Empfangs-Speicherbereich 210 des ausgewählten Kanals 22 gespeicherten Empfangsdaten RD vollständig in die Sendedaten TD geschrieben. Dabei hat das Steuersignal NE einen Wert, der einem nicht-leeren Empfangs-Speicherbereich 210 zugehörig ist.

Auf diesem Wege gelangen die vom zweiten Slave 82 in das erste Datenpaket P geschriebenen Daten mittels des nachfolgenden zweiten Datenpakets P unverändert zum ersten Slave 81. Dem Fachmann ist klar, dass die Kommunikation auch in der umgekehrten Richtung vom ersten Slave 81 zum zweiten Slave 82 erfolgen kann.

Zwar wird im Ausführungsbeispiel der Figur 4 durch die Transceiverschaltung 30 in jedem Zyklus ein neues Datenpaket P mit Nutzdatenbereich erzeugt, die Empfangsdaten RD werden jedoch unverändert in die Sendedaten übernommen, so dass der Nutzdatenbereich praktisch im Bussystem über den Bus 3 zirkuliert. Die Übertragung erfolgt dabei vorzugsweise zyklisch.

In einem Ausführungsbeispiel in Figur 5 ist die Übertragung von Datenpaketen P, P' zwischen Transceiverschaltung 30 und Slaves 81, 82 schematisch dargestellt. Im Ausführungsbeispiel der Figur 5 ist die Transceiverschaltung 30 eingerichtet, das Datenpaket P für die Sendedaten TD und entsprechend auch das ursprüngliche Datenpaket der Empfangsdaten RD zu erzeugen. Die Sendedaten TD und die Empfangsdaten RD dienen dabei der Prozesssteuerung. Im Ausführungsbeispiel der Figur 5 weist die Transceiverschaltung 30 eine erste Finite-State-Machine 310 (deutsch - endlicher Automat) auf, die zur Erzeugung des Datenpakets P eingerichtet ist. Dabei ist die erste Finite-State-Machine 310 eingerichtet, das Datenpaket P mit einem Kopf H und einen Datenbereich PL für die Sendedaten TD zu erzeugen. Weiterhin kann das Datenpaket einen Trailer T aufweisen. Im Ausführungsbeispiel der Figur 5 beinhaltet der Trailer einen Zählwert CNT und einen Prüfwert CRC (engl. - Cyclic Redundancy Check). Der Datenbereich PL (engl. Payload) enthält die Daten TD, RD und eine Kennung ILI. Der Datenbereich PL kann auch als Nutzdatenbereich bezeichnet werden. Der Kopf H (engl. Head) weist eine Paketkennung für den Typ des übertragenen Datenpakets P und Steuerdaten CD auf. Jedes von der Transceiverschaltung 30 erzeugte und gesendete Datenpaket P wird über den Ausgang 33 und den Bus 3 durch die Slaves 81, 82 wieder zurück an den Eingang 34 der Transceiverschaltung 30 übertragen. Das empfangene Datenpaket ist in Figur 5 als P' bezeichnet, da die gesendeten Sendedaten TD in dem Datenbereich PL durch die Slaves 81, 82 verändert werden können und durch die Änderung Empfangsdaten RD von der Transceiverschaltung 30 empfangen werden. Die Struktur von gesendetem Datenpaket P und empfangenen Datenpaket P' ist jedoch unverändert. Vorteilhafterweise ist auch die Länge von gesendetem Datenpaket P und empfangenen Datenpaket P' gleich.

Im Ausführungsbeispiel der Figur 5 weist die Transceiverschaltung 30 einen Steuereingang 31 auf. Mit dem Steuereingang 31 ist beispielsweise eine Steuerschaltung 40, wie in Figur 1 oder ein Prozessor verbunden. Die Transceiverschaltung 30 ist eingerichtet, das Datenpaket P basierend auf einem Steuersignal ST am Steuereingang 31 zu erzeugen. Zu Bestätigung des gesendeten Datenpakets P kann am Signalausgang 32 ein Bestätigungssignal DN ausgegeben werden.

Wie in den vorhergehenden Figuren erläutert ist die Transceiverschaltung 30 über die Ein-/Ausgänge 38, 39 mit einem oder mehreren Kanälen 21, 22, 23 verbunden.

Über den Eingang 31 erhält die Transceiverschaltung 30 einen Startpuls, eine Kennung ILI und die Länge des zu sendenden Datenpakets P. Die Transceiverschaltung ist eingerichtet, den Kanal 21, 22, 23 basierend auf der Kennung ILI auszuwählen. Dadurch kann die Transceiverschaltung 30 die Kennung ILI und den Kanal 21, 22, 23 mit Sendedaten TD einander zuordnen. Für die Zuordnung ist im Ausführungsbeispiel der Figur 5 als Zuordnungseinheit 330 eine Tabelle LUT (engl. Look Up Table) vorgesehen, in die eingangsseitig die Kennung ILI eingegeben wird und die ausgangsseitig den entsprechenden Kanal 21, 22, 23 anspricht. Die Tabelle LUT kann dabei - wie in Figur 5 dargestellt - in der Transceiverschaltung 30 ausgebildet sein, oder die Tabelle LUT ist außerhalb der Transceiverschaltung 30 ausgebildet und von der Transceiverschaltung 30 zugreifbar. Alternativ zur Tabelle LUT kann auch eine andere Zuordnungseinheit 330, beispielsweise mittels Adressierung oder dergleichen vorgesehen sein.

Die erste Finite-State-Machine 310 der Transceiverschaltung 30 ist eingerichtet, das Datenpaket P für die Prozesssteuerung mit den Sendedaten. TD und der Kennung ILI zu erzeugen. Die Transceiverschaltung 30 weist eine zweite Finite-State-Machine 320 auf und ist eingerichtet, die Empfangsdaten RD des empfangenen Datenpakets P' basierend auf der im empfangenen Datenpaket P' enthaltenen Kennung ILI und der Zuordnung zum Kanal 21, 22, 23 in den Empfangs-Speicherbereich 210 des zur Kennung ILI zugehörigen Kanals 21, 22, 23 zu schreiben. Für die Zuordnung mittels der Kennung ILI ist im Ausführungsbeispiel der Figur 5 wiederum die Tabelle LUT (engl. Look Up Table) vorgesehen, in die eingangsseitig die Kennung ILI von der zweiten Finite-State-Machine 320 eingegeben wird und die ausgangsseitig den entsprechenden Kanal 21, 22, 23 anspricht.

Die Datenbusteilnehmer 81, 82 sind mittels Instruktionslisten und der Kennung ILI eingerichtet, die Daten TD, RD im Datenpaket P auszuwerten. Die Kennung ILI kann auch als Index oder Instruktionslistenindex bezeichnet werden. Hierzu ist beispielsweise die Kennung ILI den Prozessdaten TD, RD im Datenpaket P vorangestellt. Erkennt der erste Slave 81 die Kennung ILI, beispielsweise an der Position der ILI innerhalb des Datenpakets P, legt der erste Slave die Daten TD in einem Empfangsregister 810 ab. Erkennt der zweite Slave 82 die Kennung ILI, beispielsweise an der Position der ILI innerhalb des Datenpakets P, legt der zweite Slave die Daten TD in seinem Empfangsregister 820 ab. Die Daten TD werden beim Ablegen beispielsweise kopiert und sind dann nach wie vor im Nutzdatenbereich PL des Datenpakets P enthalten. Entsprechend können die Slaves 81, 82 auch Daten in das Datenpaket P schreiben, indem bereits im Datenpaket P vorhandene Daten TD zu späteren Empfangsdaten RD geändert werden. Beispielsweise weist der Slave 81 einen Analogeingang (nicht dargestellt) auf, wobei digitale Eingangsdaten eines digitalisierten Analogsignals in den Nutzdatenbereich PL des Datenpakets P geschrieben werden. Hierdurch wird das Datenpaket P verändert und enthält nun die Daten des digitalisierten Analogsignals als Empfangsdaten RD für den Master 2.

Wenn es sich bei dem Lokalbus 3 um einen Ringbus handelt, dann ist die Lokalbusschnittstelle des Masters in zwei Teile 33, 34 aufgeteilt. Dabei werden Daten TD über die Verbindung 33 in Abwärtsrichtung auf den Lokalbus 3 gesendet. Hierzu werden durch den Master 2 die Sendedaten TD aus einem ausgewählten Kanal 21, 22, 23 in einen Nutzdatenbereich PL des Datenpakets P geschrieben. Zudem wird durch den Master 2 eine zum ausgewählten Kanal 21, 22, 23 zugehörige Kennung ILI in das Datenpaket P geschrieben. Durch den Master 2 wird das Datenpaket P beinhaltend die Kennung ILI und die Sendedaten TD an den Slave 81, 82 gesendet. Anschließend werden vom Master 2 Daten RD des Datenpakets P' über die Verbindung 34 in Aufwärtsrichtung vom Lokalbus 3 empfangen. Dabei wird das an den Slave 81, 82 gesendete Datenpaket P zurück an den Master 2 übertragen. Durch den Master 2 wird das empfangende Datenpaket P' basierend auf der Kennung ILI dem ausgewählten Kanal 21, 22, 23 zugeordnet und die Empfangsdaten RD des empfangenden Datenpakets P' werden im ausgewählten Kanal 21, 22, 23 gespeichert. Die Gültigkeit der Empfangsdaten RD wird dabei beispielsweise anhand der CRC oder einem Valid-Bit bestimmt.

Dabei ist klar, dass auch bereits vor der Gültigkeitsanzeige Teile des von der Transceiverschaltung 30 erzeugten Datenpakets P auf den Lokalbus 3 gesendet werden können. Insbesondere, wenn die Teile des Datenpakets P die Slaves 81, 82 - wie in Figur 5 gezeigt - sukzessive durchlaufen, d.h. zu jeder gegebenen Zeit vom Master 2 immer nur ein Teil des Datenpakets P gesendet wird, der dann weitergeleitet wird durch die einzelnen Slaves 81, 82. Hinsichtlich der Kommunikation basiert der im Ausführungsbeispiel der Figur 5 gezeigte Ringbus 3 auf einer Zyklusrahmenkommunikation.

Ein Zyklusrahmen kann dabei beispielsweise als ein wiederkehrendes (zyklisches) vorzugsweise äquidistantes Zeitintervall, in dem Daten auf dem Ringbus 3 übertragbar sind, definiert werden. Der Zyklusrahmen weist beispielsweise zumindest eine Startkennung und einen Zeitbereich zur Übertragung von Daten auf. Mehrere Startkennungen aufeinander folgender Zyklusrahmen sind dabei vorteilhafterweise in einem zeitlich äquidistanten Abstand zueinander. Der genannte Zeitbereich ist für die Übertragung der Daten TD, RD vorgesehen, die innerhalb des Zyklusrahmens in Form von Datenpaketen P, P' übertragen werden können. Die Startkennung und die Datenpakete P, P' werden über den Ringbus 3 übertragen und durchlaufen alle Datenbusteilnehmer, den Master 2 und die Slaves 81, 82. Vorteilhafterweise wird der Zyklusrahmen durch den Master 2 im Ringbus 3 initiiert. Die Startkennung ist separat, also als eigenständiges Symbol übertragbar oder vorteilhafterweise in einem Startdatenpaket enthalten.

Innerhalb des Zeitbereichs des Zyklusrahmens werden keine, ein oder mehrere Datenpakete P, P' übertragen. Vorteilhafterweise werden in einem Zyklusrahmen Leerlauf-Daten (Idle-Data) eingefügt, insbesondere angrenzend an zumindest ein Datenpaket P, P'. Vorteilhafterweise bewirkt die Übertragung der Datenpakete P, P' und/oder der Leerlauf-Daten ein ununterbrochenes Signal auf dem Ringbus 3. Das Signal ermöglicht es den Slaves 81, 82 sich auf dieses zeitlich zu synchronisieren. Jedes Datenpaket P, P' wird von dem Master 2 in Abwärtsrichtung an den ersten Slave 81 des Ringbusses 3 gesendet. Dieser, empfängt einen ersten Teil des Datenpakets P über seine Schnittstelle. Der Slave 81 führt dann eine Verarbeitung des Teils aus, und leitet den Teil dann an den nächsten Slave 82 über seine Schnittstelle weiter, vorzugsweise gleichzeitig empfängt der erste Slave 81 einen zweiten Teil des Datenpakets P usw.

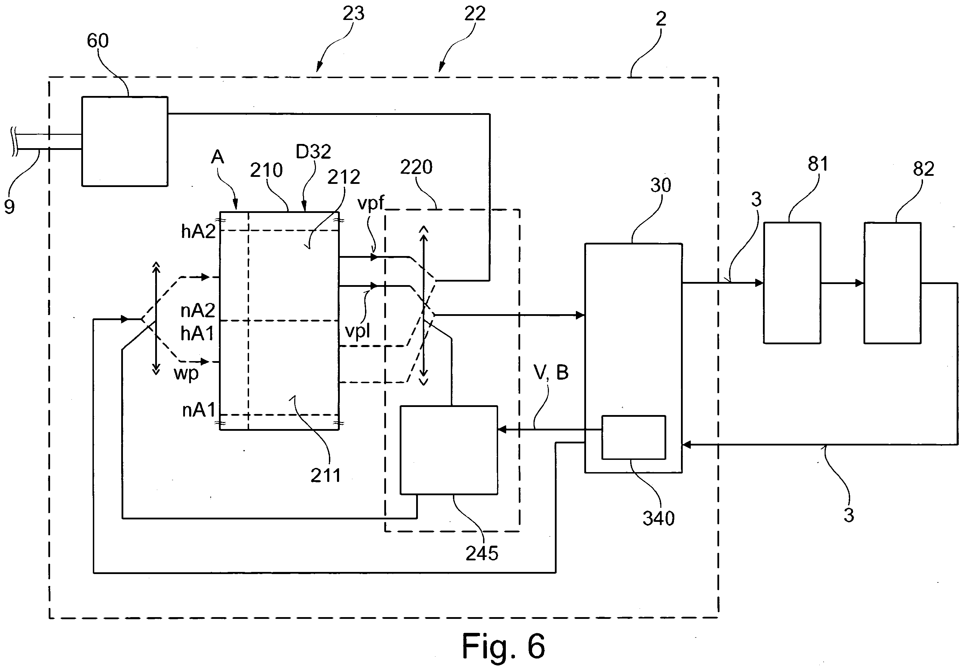

In Figur 6 ist ein Blockschaltplan eines Masters 2 eines weiteren Ausführungsbeispiels der Erfindung schematisch dargestellt. Dabei sind in Figur 2 nur ein Teil der Funktionsblöcke des Masters 2 schematisch dargestellt. Das Bussystem in Figur 6 zeigt zudem zwei Slaves 81, 82 und einen lokalen Bus 3. Im Ausführungsbeispiel der Figur 6 weist der Master 2 eine Transceiverschaltung 30 zum Senden von Sendedaten und Empfangen von Empfangsdaten über den lokalen Bus 3, beispielsweise mittels Datenpakete, auf.

In einem Ausführungsbeispiel der Figur 6 sind Teile der Funktionen zweier Kanäle 22 und 23 schematisch dargestellt, wobei die beiden Kanäle 22 und 23 alternativ oder in Kombination in einem Master 2 implementiert sein können. In einem Ausführungsbeispiel der Figur 6 ist ein Empfangs-Speicherbereich 210 vorgesehen, der von beiden Kanälen 22, 23 gemeinsam genutzt werden kann. Entsprechend weisen beide Kanäle 22 und 23 den Empfangs-Speicherbereich 210 auf.

In einem Ausführungsbeispiel der Figur 6 weist der Empfangs-Speicherbereich 210 einen ersten Buffer 211 und einen zweiten Buffer 212 auf. Die Buffer 211, 212 sind dabei durch unterschiedliche Adressräume im. Empfangs-Speicherbereich 210 gebildet. Durch die Adresse A sind in einem Ausführungsbeispiel der Figur 6 mittels eines Schreib-Zeigers wp (engl. - write pointer) beispielweise 32 Bit breite Speicherzellen durch Datenblöcke D32 zu beschreiben oder mittels eines Lese-Zeigers rpf, rpl (engl. - read pointer) auszulesen.

Die Transceiverschaltung 30 ist eingerichtet, die Empfangsdaten eines über den Lokalbus 3 empfangenen Datenpakets mittels des Schreib-Zeigers wp in den zweiten Buffer 212 zu schreiben. Dabei wird der Schreib-Zeiger wp durch eine Steuerschaltung 245 gesteuert. Der durch die Steuerschaltung 245 gesteuerte Schreib-Zeiger wp zeigt dabei auf eine Adresse A des zweiten Buffers 212, wenn vorhergehende Empfangsdaten eines vorhergehend empfangenen Datenpakets als gültige Empfangsdaten im ersten Buffer 211 gespeichert sind. Eine Ermittlungsschaltung 340 des Transceivers 30 bestimmt, ob die Empfangsdaten bzw. das empfangende Datenpaket gültig sind.

Im Ausführungsbeispiel der Figur 6 ist die Transceiverschaltung 30 eingerichtet, die Empfangsdaten des empfangenen Datenpakets zu prüfen und die Empfangsdaten in den Empfangs-Speicherbereich 210 zu schreiben. Das Schreiben der Empfangsdaten kann dabei unabhängig von der Gültigkeit der Empfangsdaten erfolgen, wobei zu den Empfangsdaten im jeweiligen Buffer 211, 212 die Gültigkeit beispielweise mittels eines Flags mitgespeichert wird. Sind die im Buffer 211, 212 gespeicherten Daten ungültig, können diese mit nachfolgenden Daten überschrieben werden. Alternativ ist es möglich, nur bei positivem Prüfungsergebnis die Empfangsdaten in einen Buffer 211, 212 des Empfangs-Speicherbereichs 210 zu schreiben und bei Ungültigkeit zu verwerfen. Die Gültigkeit kann als Gültigkeitswert V von der Ermittlungsschaltung 310 der Transceiverschaltung 30 an die Steuerungsschaltung 245 der Selektionsschaltung 220 übertragen werden. Die Bestimmung des Gültigkeitswerts V kann beispielsweise anhand eines Prüfwertes CRC32 (engl. - Cyclic Redundancy Check) oder eines übertragenen Gültigkeits-Bits B erfolgen. Im Ausführungsbeispiel der Figur 6 ist das Gültigkeits-Bit B gezeigt, das in höheren Protokollschichten übertragen werden kann und bspw. dazu dient, dass einer der Slaves 81, 82 durch das übertragene Gültigkeits-Bit B dem Master 2 anzeigt, dass die von Slave 81, 82 gesendeten Empfangsdaten ungültig sind, beispielweise aufgrund einer Slave-eigenen Fehlerdiagnose. Im Ausführungsbeispiel der Figur 6 sind mit beiden Werten V, B die beiden zuvor beschriebenen Möglichkeiten schematisch dargestellt. Die Bestimmung der Gültigkeit ist nicht auf diese beiden Beispiele begrenzt, so können noch andere Gültigkeitsarten verwendet werden.

Die Transceiverschaltung 30 ist eingerichtet, die Empfangsdaten eines über den Lokalbus 3 empfangenen Datenpakets mittels des Schreib-Zeigers wp in den ersten Buffer 211 zu schreiben, wenn vorhergehende Empfangsdaten eines vorhergehend empfangenen Datenpakets als gültige Empfangsdaten im zweiten Buffer 212 gespeichert sind. So ist sichergestellt, dass zumindest immer die letzten gültigen Empfangsdaten in einem der beiden Buffer 211, 212 des Empfangs-Speicherbereichs 210 stehen und verwendet werden können.

Die Steuerschaltung 245 ist zudem Bestandteil einer Selektionsschaltung 220, die über zumindest einen Lese-Pointer rpl eine Auswahl der im Speicherbereich 210 gespeicherten Daten D32 ermöglicht. Die Selektionsschaltung 220 ist dabei Bestandteil zumindest eines Kanals 22. In einem Ausführungsbeispiel der Figur 6 ist ein Ausgang der Selektionsschaltung 220 mit der Transceiverschaltung 30 verbunden. Die Selektionsschaltung 220 weist durch den Lese-Pointer einen ersten Eingang 221 zur Auswahl erster Daten auf. Zur Initialisierung einer Zirkulation von Prozessdaten auf dem lokalen Bus 3 werden als erste Daten beispielweise Default-Werte in den ersten Buffer 211 beispielsweise durch einen Prozessor (nicht dargestellt) geschrieben. Derartige Default-Werte sind beispielweise alles Nullen, die von der niedrigsten Adresse nA1 des ersten Buffers 211 bis zur höchsten Adresse hA1 des ersten Buffers 211 in den Speicherbereich 210 geschrieben werden.

Wird nun ein Datenpaket für die Zirkulation das erste Mal durch den Master 2 erzeugt, so werden als zu sendende Daten die ersten Daten, also die Default-Werte mittels des Lese-Zeigers rpl in das Datenpaket geschrieben und von der Transceiverschaltung 30 gesendet. Das Datenpaket gelangt über die Slaves 81, 82, die die Daten im Datenpaket ändern können, zurück an die Transceiverschaltung 30 des Masters 2. Empfängt der Master 2 Daten im Datenpaket, so sind diese als Empfangsdaten definiert. Die Transceiverschaltung 30 ist eingerichtet, das Datenpaket mit einem Kopf und einem Datenbereich über den Bus 3 zu empfangen und die Empfangsdaten aus dem Datenbereich des empfangenen Datenpakets zu lesen. Die Transceiverschaltung 30 schreibt die Empfangsdaten in den zweiten Buffer 212, da im ersten Buffer 211 gültige Daten, nach der Initialisierung die Default-Werte vorliegen.

In einem Ausführungsbeispiel der Figur 6 weist die Selektionsschaltung 220 einen zweiten Eingang in Form des Lese-Pointers rpl auf, der eine Verbindung zwischen Empfangs-Speicherbereich 210 und Transceiverschaltung 30 ermöglicht. In der Figur 6 ist das schematisch dargestellt, indem der Lese-Zeiger rpl gestrichelt für eine andere Adresse A schematisch dargestellt ist.

Die Selektionsschaltung 220 ist eingerichtet, die Sendedaten aus den ersten Daten und den im zweiten Buffer 212 des Empfangs-Speicherbereichs 210 geschriebenen Empfangsdaten auszuwählen und die Sendedaten in die Transceiverschaltung 30 für ein neues, zu sendendes Datenpaket auszugeben. Im Ausführungsbeispiel der Figur 6 ist die Transceiverschaltung 30 eingerichtet, das neue, zu sendende Datenpaket mit einem Kopf und einem Datenbereich zu erzeugen. Liegen - wie zuvor erläutert - im zweiten Buffer 212 des Empfangs-Speicherbereichs 210 gültige Daten vor, steuert die Steuerschaltung 245 den Lesezeiger rpl entsprechend und die Daten D32 von der niedrigsten Adresse nA2 bis zur höchsten Adresse hA2 des zweiten Buffers 212 werden in den Transceiver 30 kopiert.

Die Verbindung zwischen dem Empfangs-Speicherbereich 210 und dem Eingang der Selektionsschaltung 220 ist zur direkten Übertragung der Empfangsdaten aus dem zweiten Buffer 212 ausgebildet. Die Selektionsschaltung 220 benötigt hierzu keinen externen Prozessor, sondern kann die direkte Übertragung, beispielweise durch einen Kopiervorgang, autark steuern. Die Empfangsdaten aus dem zweiten Buffer 212 werden im Ausführungsbeispiel der Figur 6 unverändert als Sendedaten in die Transceiverschaltung 30 eingegeben. Die Transceiverschaltung 30 ist eingerichtet, mit Erzeugung des neuen, zu sendenden Datenpakets diese Sendedaten in den Datenbereich des neuen, zu sendenden Datenpakets zu schreiben.

Das neue Datenpaket wird wiederum durch die Slaves 81, 82 zurück an die Transceiverschaltung 30 des Masters 2 übertragen. Die Transceiverschaltung 30 prüft erneut die Gültigkeit der Empfangsdaten in diesem neuen Datenpaket. Die Empfangsdaten werden in den ersten Buffer 211 des Empfangs-Speicherbereichs 210 geschrieben, da im zweiten Buffer 212 die gültigen Empfangsdaten des vorhergehenden Datenpakets geschrieben wurden und noch vorhanden sind. Sind auch die neuen Empfangsdaten des neuen Datenpakets im ersten Buffer gültig, sendet die Ermittlungsschaltung 340 der Transceiverschaltung 30 ein Gültigkeits-Bit B die Steuerschaltung 245 der Selektionsschaltung 220.

Die Selektionsschaltung 220 ist eingerichtet, zur Auswahl der Sendedaten aus dem Empfangs-Speicherbereich 210 die Empfangsdaten aus demjenigen aus ersten Buffer 211 oder zweiten Buffer 212 auszuwählen, die aus dem zuletzt empfangenen und gültige Empfangsdaten aufweisenden Datenpaket stammen. Im zuvor beschriebenen Fall liegen nun die neusten gültigen Empfangsdaten im ersten Buffer 211. Entsprechend würden für ein folgend zu erzeugendes Datenpaket die Empfangsdaten aus dem ersten Buffer als Sendedaten in die Transceiverschaltung kopiert oder verschoben. Angenommen die Empfangsdaten im ersten Buffer 211 wären zwar neuer, jedoch ungültig, so würden die gültigen Empfangsdaten des letzten Datenpakets mit gültigen Empfangsdaten aus dem zweiten Buffer 212 erneut selektiert.

Im Ausführungsbeispiel der Figur 6 weist der Master 2 zudem eine Schnittstellenschaltung 60 zu einem beispielsweise als Feldbus ausgebildeten übergeordneten Bus 9 auf. Weiterhin weist die Selektionsschaltung 220 des Masters 2 einen zweiten Lesezeiger rpf auf, der das Auslesen gültiger Empfangsdaten aus dem ersten Buffer 211 beziehungsweise dem zweiten Buffer 212 ermöglicht. Die Empfangsdaten des letzten Datenpakets mit gültigen Empfangsdaten wird mittels des zweiten Lesezeigers rpf in die Schnittstellenschaltung 60 transferiert (beispielsweise kopiert) und über den Feldbus 9 übertragen. Der Übertragung über den Feldbus 9 ist im Master 2 ein spezieller Kanal 23 zugeordnet. Der Kanal 23 weist entsprechend die Schnittstellenschaltung 60 als eigene Hardware für die Funktion dieses Kanals 23 auf.

### Bezugszeichenliste

- 1: Bussystem
- 2: Master
- 3: Bus, Ringbus
- 9: Feldbus, übergeordneter Bus
- 10: SPS, Leitstation
- 21, 22, 23: Kanal
- 30: Transceiverschaltung
- 31: Steuereingang
- 32: Signalausgang
- 33: Verbindung, Ausgang
- 34: Verbindung, Eingang
- 38: Verbindung, Ausgang
- 39: Verbindung, Eingang
- 40: Steuerschaltung, Rahmengeneratorschaltung
- 41: Verbindung
- 42: Verbindung
- 50: Prozessor, Mikrocontroller
- 55: Chip-interner Parallelbus
- 60: Feldbus-Schnittstellenschaltung, FBC
- 70: Datenverwaltungseinheit, DMA-Controller
- 75: Halbleiterchip, Anwendungsspezifischer Schaltkreis, FPGA
- 81, 82: Slave
- 210: Empfangs-Speicherbereich
- 211, 212: Buffer
- 220: Selektionsschaltung, MUX
- 221, 222: Eingang
- 225: Ausgang
- 226: Steuereingang
- 230: Sende-Speicherbereich
- 240: Steuer-Speicherbereich
- 245: Steuerschaltung
- 310, 320: FSM, Finite-State-Machine, Automat
- 330: Zuordnungseinheit, Tabelle
- 340: Ermittlungsschaltung
- 810, 820: Register
- 2201, 2202, 2203, 2204: Schaltelement

- CD: Steuerdaten
- CNT: Zählerwert
- CRC: Prüfwert
- D1: erste Daten
- DN: Bestätigungssignal
- H: Kopf
- NE: Steuersignal
- PL: Nutzdatenbereich
- IDE: Datenpaketkennung
- ILI: Kennung
- P, P': Datenpaket
- RD: Empfangsdaten
- ST: Steuersignal
- T: Trailer
- TD: Sendedaten
- LUT: Tabelle, Zuordnungstabelle
- V: Gültigkeitswert
- B: Gültigkeits-Bit
- D32: Daten
- A: Adresse
- nA1, nA2: niedrigste Adresse
- hA1, hA2: höchste Adresse
- wp: Schreibzeiger, Write-Pointer
- rpf, rpl: Lesezeiger, Read-Pointer

## Patentansprüche

1. Master (2) eines Bussystems (1) zur Prozesssteuerung mit einem Slave (81, 82) und einem Bus (3),
- mit einer Transceiverschaltung (30) zum Senden von Sendedaten (TD) und Empfangen von Empfangsdaten (RD) für die Prozesssteuerung mittels Datenpakete (P, P'),
- mit einem Kanal (21, 22, 23), der einen Empfangs-Speicherbereich (210) aufweist,
- bei dem die Transceiverschaltung (30) eingerichtet ist, die Empfangsdaten (RD) eines über den Bus (3) empfangenen Datenpakets (P') in den Empfangs-Speicherbereich (210) zu schreiben,
- bei dem der Kanal (21, 22, 23) zumindest eine Selektionsschaltung (220) aufweist, wobei ein Ausgang (225) der Selektionsschaltung (220) mit der Transceiverschaltung (30) verbunden ist,
- bei dem die Selektionsschaltung (220) einen ersten Eingang (221) zur Auswahl erster Daten (D1) aufweist,
- bei dem die Selektionsschaltung (220) einen zweiten Eingang (222) aufweist, wobei der zweite Eingang (222) mit dem Empfangs-Speicherbereich (210) verbunden ist, und
- bei dem die Selektionsschaltung (220) eingerichtet ist, die Sendedaten (TD) aus den in den Empfangs-Speicherbereich (210) geschriebenen Empfangsdaten (RD) auszuwählen und die Sendedaten (TD) in die Transceiverschaltung (30) für ein über den Bus (3) zu sendendes Datenpaket (P) auszugeben.

2. Master (2) nach Anspruch 1,
- bei dem die Transceiverschaltung (30) eingerichtet ist, die Datenpakete (P, P') für die Sendedaten (TD) und die Empfangsdaten (RD), insbesondere mit einem Kopf (H) und einen Datenbereich (PL) für die Sendedaten (TD) oder Empfangsdaten (RD) zu erzeugen.

3. Master (2) nach einem der vorhergehenden Ansprüchen,
- bei dem die Transceiverschaltung (30) eingerichtet ist, ein Datenpaket (P') mit einem Kopf (H) und einem Datenbereich (PL) über den Bus (3) zu empfangen und die Empfangsdaten (RD) aus dem Datenbereich (PL) des empfangenen Datenpakets (P') zu lesen.

4. Master (2) nach einem der vorhergehenden Ansprüchen,
- bei dem die Transceiverschaltung (30) eingerichtet ist, ein zu sendendes Datenpaket (P) mit einem Kopf (H) und einem Datenbereich (PL) zu erzeugen.

5. Master (2) nach einem der vorhergehenden Ansprüchen,
- bei dem die Verbindung zwischen dem Empfangs-Speicherbereich (210) und dem zweiten Eingang (222) zur direkten Übertragung der Empfangsdaten (RD) ausgebildet ist.

6. Master (2) nach einem der vorhergehenden Ansprüchen,
- bei dem die Transceiverschaltung (30) eingerichtet ist, mit Erzeugung des zu sendenden Datenpakets (P) die Sendedaten (TD) In den Datenbereich (PL) des zu sendenden Datenpakets (P) zu schreiben.

7. Master (2) nach einem der vorhergehenden Ansprüchen,
- bei dem die Transceiverschaltung (30) eingerichtet ist, die Empfangsdaten (RD) des empfangenen Datenpaket (P') zu prüfen.

8. Master (2) nach einem der vorhergehenden Ansprüchen,
- bei dem der Empfangs-Speicherbereich (210) mindestens eine Größe aufweist, um alle Empfangsdaten (RD) des empfangenen Datenpakets (P') zeitgleich zu speichern.

9. Master (2) nach einem der vorhergehenden Ansprüchen,
- bei dem der Empfangs-Speicherbereich (210) einen ersten Buffer (211) und einen zweiten Buffer (212) aufweist,
- bei dem die Transceiverschaltung (30) eingerichtet ist,
∘ die Empfangsdaten (RD) in den zweiten Buffer (212) zu schreiben, wenn vorhergehende Empfangsdaten (RD) eines vorhergehend empfangenen Datenpakets als gültige Empfangsdaten (RD) im ersten Buffer (211) gespeichert sind, oder
∘ die Empfangsdaten (RD) in den ersten Buffer (211) zu schreiben, wenn vorhergehende Empfangsdaten (RD) eines vorhergehend empfangenen Datenpakets als gültige Empfangsdaten (RD) im zweiten Buffer (212) gespeichert sind.

10. Master (2) nach Anspruch 9,
- bei dem die Selektionsschaltung (220) für die Auswahl der Sendedaten (TD) aus dem Empfangs-Speicherbereich (210) eingerichtet ist, die Empfangsdaten (RD) aus demjenigen aus ersten Buffer (211) oder zweiten Buffer (212) auszuwählen, die aus dem zuletzt empfangenen und gültige Empfangsdaten (RD) aufweisenden Datenpaket (P') stammen.

11. Master (2) nach einem der vorhergehenden Ansprüchen,
- bei dem die Transceiverschaltung (30) eingerichtet ist, den Kanal (21, 22, 23) zuzuordnen den Sendedaten (TD) und/oder den Empfangsdaten (RD) mittels einer Kennung (ILI) im Datenpaket (P, P').

12. Master (2) nach Anspruch 11,
- bei dem die Transceiverschaltung (30) eine erste Finite-State-Machine (310) aufweist und eingerichtet ist, das Datenpaket (P, P') für die Prozesssteuerung mit der Kennung (ILI) mittels der ersten Finite-State-Machine (310) zu erzeugen.

13. Master (2) nach einem der Ansprüche 11 oder 12,
- bei dem die Transceiverschaltung (30) eine zweite Finite-State-Machine (320) aufweist und eingerichtet ist, die Empfangsdaten (RD) des empfangenen Datenpakets (P') basierend auf der im empfangenen Datenpaket (P') enthaltenen Kennung (ILI) und der Zuordnung zum Kanal (21, 22, 23) in den Empfangs-Speicherbereich (210) des Kanals (21, 22, 23) zu schreiben.

14. Master (2) nach einem der vorhergehenden Ansprüche,
- bei dem die Transceiverschaltung (30) einen Steuereingang (31) aufweist und eingerichtet ist, das Datenpaket (P) basierend auf einem Steuersignal (St) am Steuereingang (31) zu erzeugen.

15. Master (2) nach einem der vorhergehenden Ansprüche.
- bei dem die Selektionsschaltung (220) eingerichtet ist, die Sendedaten (TD) aus den ersten Daten (D1) und den in den Empfangs-Speicherbereich (210) geschriebenen Empfangsdaten (RD) auszuwählen.

16. Master (2) nach Anspruch 15,
- bei dem der Kanal (21, 23) zur Speicherung der ersten Daten (D1) einen Sende-Speicherbereich (230) aufweist.

17. Master (2) nach Anspruch 16,
- mit einer Feldbus-Schnittstellenschaltung (60), wobei die Feldbus-Schnittstellenschaltung (60) mit dem Sende-Speicherbereich (230) des Kanals (21, 23) verbunden ist zum Eingeben von über einen Feldbus (9) empfangene Prozessdaten als die ersten Daten (D1) in den Sende-Speicherbereich (230).

18. Master (2) nach einem der vorhergehenden Ansprüche,
- bei dem die Selektionsschaltung (220) zur bitgranularen Auswahl eingerichtet ist, wobei mittels der Selektionsschaltung (220) Sende-Bits der Sendedaten (TD) aus Bits der ersten Daten (D1) und Bits der Empfangsdaten (RD) bitweise zusammengesetzt sind.

19. Master (2) nach einem der vorhergehenden Ansprüche,
- bei dem der erste Eingang (221) der Selektionsschaltung (220) für die ersten Daten (D1) eine Bitbreite von mehreren Bits aufweist, und
- bei dem die Selektionsschaltung (220) für jedes der mehreren Bits ein Schaltelement (2201, 2202, 2203, 2204) aufweist,
- bei dem die Selektionsschaltung (220) derart eingerichtet ist, dass die Schaltelemente (2201, 2202, 2203, 2204) unabhängig voneinander ansteuerbar sind.

20. Master (2) nach einem der vorhergehenden Ansprüche,
- bei dem der Kanal (21) einen Steuer-Speicherbereich (240) mit Steuerwerten zur Steuerung der Selektionsschaltung (220) aufweist.

21. Master (2) nach einem der vorhergehenden Ansprüche,
- bei dem die ersten Daten (D1) des Kanals (22) - insbesondere durch Anschlüsse an High-Potential und/oder Low-Potential gebildete - feste Daten sind, die am ersten Eingang (221) der Selektionsschaltung (220) anliegen.

22. Master (2) nach Anspruch 21,
- bei dem der Empfangs-Speicherbereich (210) einen Steuerausgang (219) zur Ausgabe eines Steuersignals (NE) zur Steuerung der Selektionsschaltung (220) aufweist,
- bei dem der Empfangs-Speicherbereich (210) eingerichtet ist, einen Wert des Steuersignals (NE) basierend auf dem Empfang der Empfangsdaten (RD) an einen Eingang (226) der Selektionsschaltung (220) anzulegen.

23. Verfahren zum Betrieb eines Bussystems (1) zur Prozesssteuerung mit einem Master (2) und einem Slave (81, 82),
- bei dem vom Master (2) ein Datenpaket (P) mit Sendedaten (TD) für die Prozesssteuerung erzeugt wird,
- bei dem durch den Master (2) die Sendedaten (TD) aus einem ausgewählten Kanal (21, 22, 23) in einen Nutzdatenbereich (PL) des Datenpakets (P) geschrieben werden,
- bei dem durch den Master (2) eine zum ausgewählten Kanal (21, 22, 23) zugehörige Kennung (ILI) in das Datenpaket (P) geschrieben wird,
- bei dem durch den Master (2) das Datenpaket (P) beinhaltend die Kennung (ILI) und die Sendedaten (TD) an den Slave (81, 82) gesendet wird,
- bei dem das an den Slave (81, 82) gesendete Datenpaket (P) zurück an den Master (2) übertragen wird und das Datenpaket (P') vom Master (2) empfangen wird,
- bei dem durch den Master (2) das empfangende Datenpaket (P') basierend auf der Kennung (ILI) dem ausgewählten Kanal (21, 22, 23) zugeordnet wird,
- bei dem Empfangsdaten (RD) des empfangenden Datenpakets (P') im ausgewählten Kanal (21, 22, 23) gespeichert werden, und
- bei dem zumindest ein Teil der im ausgewählten Kanal (21, 22, 23) gespeicherten Empfangsdaten (RD) für ein nachfolgend über den Bus (3) zu sendendes Datenpaket (P) in die Sendedaten (TD) geschrieben wird.

24. Verfahren nach Anspruch 23,
- bei dem durch den Master (2) eine Nicht-Teilnahme eines Slaves (81) an einer Buskommunikation auf dem Bus (3) ermittelt wird,
- bei dem durch den Master (2) ein dem ermittelten Slave (81) zugehöriger Teil der Empfangsdaten (RD) in die Sendedaten (TD) des Kanals (21, 22, 23) geschrieben wird.

25. Verfahren nach Anspruch 23,
- bei dem die Im ausgewählten Kanal (21, 22, 23) gespeicherten Empfangsdaten (RD) für ein nachfolgend zu sendendes Datenpaket (P) vollständig in die Sendedaten (TD) geschrieben werden.

26. Bussystem (1) zur Prozesssteuerung mit einem Master (2) und einem Slave (81, 82),
- bei dem der Master (2) eingerichtet ist, ein Datenpaket (P) mit Sendedaten (TD) für die Prozesssteuerung zu erzeugen,
- bei dem der Master (2) eingerichtet ist, die Sendedaten (TD) aus einem ausgewählten Kanal (21, 22, 23) in einen Nutzdatenbereich (PL) des Datenpakets (P) zu schreiben,
- bei dem jeder Kanal (21, 22, 23) jeweils einen zugehörigen Speicherbereich (210, 230) für seine Sendedaten (TD) aufweist,
- bei dem der Master (2) eingerichtet ist, eine zum ausgewählten Kanal (21, 22, 23) zugehörige Kennung (ILI) in das Datenpaket (P) zu schreiben,
- bei dem der Master (2) eingerichtet ist, das Datenpaket (P) beinhaltend die Kennung (ILI) und die Sendedaten (TD) an den Slave (81, 82) zu senden,
- bei dem der Slave (81, 82) eingerichtet ist, das Datenpaket (P) zu empfangen, basierend der Kennung (ILI) zumindest einen Teil der Sendedaten (TD) zu lesen und/oder zumindest einen Teil Empfangsdaten zu schreiben und das Datenpaket (P') zurück an den Master (2) zu senden,
- bei dem der Master (2) eingerichtet ist, das Datenpaket (P') zu empfangen,
- bei dem der Master (2) eingerichtet ist, das empfangene Datenpaket (P') basierend auf der Kennung (ILI) dem ausgewählten Kanal (21, 22, 23) zuzuordnen,
- bei dem der Master (2) eingerichtet ist, die Empfangsdaten (RD) des empfangenen Datenpakets (P') im ausgewählten Kanal (21, 22, 23) zu speichern, und
- bei dem der Master (2) eingerichtet ist, zumindest ein Teil der im ausgewählten Kanal (21, 22, 23) gespeicherten Empfangsdaten (RD) für ein nachfolgend über den Bus (3) zu sendendes Datenpaket (P) in die Sendedaten (TD) zu schreiben.

## Claims

1. Master (2) of a bus system (1) for process control with a slave (81, 82) and a bus (3),
- having a transceiver circuit (30) for transmitting transmit data (TD) and for receiving receive data (RD) for the process control by means of data packets (P, P'),
- having a channel (21, 22, 23) which has a receive storage area (210),
- in which the transceiver circuit (30) is configured to write the receive data (RD) from a data packet (P') received via the bus (3) to the receive storage area (210),
- in which the channel (21, 22, 23) has at least one selection circuit (220), wherein an output (225) of the selection circuit (220) is connected to the transceiver circuit (30),
- in which the selection circuit (220) has a first input (221) for selecting first data (D1),
- in which the selection circuit (220) has a second input (222), wherein the second input (222) is connected to the receive storage area (210), and
- in which the selection circuit (220) is configured to select the transmit data (TD) from the receive data (RD) written to the receive storage area (210) and to output the transmit data (TD) to the transceiver circuit (30) for a data packet (P) to be transmitted via the bus (3) .

2. Master (2) according to Claim 1,
- in which the transceiver circuit (30) is configured to generate the data packets (P, P') for the transmit data (TD) and the receive data (RD), in particular having a header (H) and a data area (PL) for the transmit data (TD) or receive data (RD).

3. Master (2) according to one of the preceding claims,
- in which the transceiver circuit (30) is configured to receive a data packet (P') having a header (H) and a data area (PL) via the bus (3) and to read the receive data (RD) from the data area (PL) of the received data packet (P').

4. Master (2) according to one of the preceding claims,
- in which the transceiver circuit (30) is configured to generate a data packet (P) to be transmitted having a header (H) and a data area (PL) .

5. Master (2) according to one of the preceding claims,
- in which the connection between the receive storage area (210) and the second input (222) is designed to directly transmit the receive data (RD) .

6. Master (2) according to one of the preceding claims,
- in which the transceiver circuit (30) is configured, with the generation of the data packet (P) to be transmitted, to write the transmit data (TD) to the data area (PL) of the data packet (P) to be transmitted.

7. Master (2) according to one of the preceding claims,
- in which the transceiver circuit (30) is configured to check the receive data (RD) from the received data packet (P').

8. Master (2) according to one of the preceding claims,
- in which the receive storage area (210) has at least a size for storing all receive data (RD) from the received data packet (P') at the same time.

9. Master (2) according to one of the preceding claims,
- in which the receive storage area (210) has a first buffer (211) and a second buffer (212),
- in which the transceiver circuit (30) is configured
° to write the receive data (RD) to the second buffer (212) if previous receive data (RD) from a previously received data packet are stored as valid receive data (RD) in the first buffer (211),
or
° to write the receive data (RD) to the first buffer (211) if previous receive data (RD) from a previously received data packet are stored as valid receive data (RD) in the second buffer (212) .

10. Master (2) according to Claim 9,
- in which, in order to select the transmit data (TD) from the receive storage area (210), the selection circuit (220) is configured to select those receive data (RD) from that of the first buffer (211) or second buffer (212) which come from the last received data packet (P') having valid receive data (RD).

11. Master (2) according to one of the preceding claims,
- in which the transceiver circuit (30) is configured to assign the channel (21, 22, 23) to the transmit data (TD) and/or to the receive data (RD) by means of an identifier (ILI) in the data packet (P, P').

12. Master (2) according to Claim 11,
- in which the transceiver circuit (30) has a first finite state machine (310) and is configured to generate the data packet (P, P') for the process control with the identifier (ILI) by means of the first finite state machine (310).

13. Master (2) according to either of Claims 11 and 12,
- in which the transceiver circuit (30) has a second finite state machine (320) and is configured to write the receive data (RD) from the received data packet (P') to the receive storage area (210) of the channel (21, 22, 23) on the basis of the identifier (ILI) included in the received data packet (P') and the assignment to the channel (21, 22, 23).

14. Master (2) according to one of the preceding claims,
- in which the transceiver circuit (30) has a control input (31) and is configured to generate the data packet (P) on the basis of a control signal (St) at the control input (31).

15. Master (2) according to one of the preceding claims,
- in which the selection circuit (220) is configured to select the transmit data (TD) from the first data (D1) and the receive data (RD) written to the receive storage area (210).

16. Master (2) according to Claim 15,
- in which the channel (21, 23) has a transmit storage area (230) for storing the first data (D1) .

17. Master (2) according to Claim 16,
- having a field bus interface circuit (60), wherein the field bus interface circuit (60) is connected to the transmit storage area (230) of the channel (21, 23) for the purpose of inputting process data received via a field bus (9) to the transmit storage area (230) as the first data (D1) .

18. Master (2) according to one of the preceding claims,
- in which the selection circuit (220) is configured for bit-granular selection, wherein transmit bits of the transmit data (TD) are composed bit-by-bit from bits of the first data (D1) and bits of the receive data (RD) by means of the selection circuit (220).

19. Master (2) according to one of the preceding claims,
- in which the first input (221) of the selection circuit (220) has a bit width of a plurality of bits for the first data (D1), and
- in which the selection circuit (220) has a switching element (2201, 2202, 2203, 2204) for each of the plurality of bits,
- in which the selection circuit (220) is configured in such a manner that the switching elements (2201, 2202, 2203, 2204) can be controlled independently of one another.

20. Master (2) according to one of the preceding claims,
- in which the channel (21) has a control storage area (240) with control values for controlling the selection circuit (220).

21. Master (2) according to one of the preceding claims,
- in which the first data (D1) of the channel (22) are fixed data - in particular formed by connections at high potential and/or low potential - which are applied to the first input (221) of the selection circuit (220).

22. Master (2) according to Claim 21,
- in which the receive storage area (210) has a control output (219) for outputting a control signal (NE) for controlling the selection circuit (220) ,
- in which the receive storage area (210) is configured to apply a value of the control signal (NE) to an input (226) of the selection circuit (220) on the basis of the reception of the receive data (RD).

23. Method for operating a bus system (1) for process control with a master (2) and a slave (81, 82),
- in which a data packet (P) containing transmit data (TD) for the process control is generated by the master (2),
- in which the transmit data (TD) from a selected channel (21, 22, 23) are written to a payload area (PL) of the data packet (P) by the master (2),
- in which an identifier (ILI) associated with the selected channel (21, 22, 23) is written to the data packet (P) by the master (2),
- in which the data packet (P) comprising the identifier (ILI) and the transmit data (TD) is transmitted to the slave (81, 82) by the master (2),
- in which the data packet (P) transmitted to the slave (81, 82) is transmitted back to the master (2) and the data packet (P') is received by the master (2),
- in which the received data packet (P') is assigned to the selected channel (21, 22, 23) by the master (2) on the basis of the identifier (ILI),
- in which receive data (RD) from the received data packet (P') are stored in the selected channel (21, 22, 23), and
- in which at least some of the receive data (RD) stored in the selected channel (21, 22, 23) are written to the transmit data (TD) for a data packet (P) to be subsequently transmitted via the bus (3).

24. Method according to Claim 23,
- in which non-participation of a slave (81) in bus communication on the bus (3) is determined by the master (2),
- in which some of the receive data (RD) associated with the determined slave (81) are written to the transmit data (TD) of the channel (21, 22, 23) by the master (2).

25. Method according to Claim 23,
- in which the receive data (RD) stored in the selected channel (21, 22, 23) are fully written to the transmit data (TD) for a data packet (P) to be subsequently transmitted.

26. Bus system (1) for process control with a master (2) and a slave (81, 82),
- in which the master (2) is configured to generate a data packet (P) containing transmit data (TD) for the process control,
- in which the master (2) is configured to write the transmit data (TD) from a selected channel (21, 22, 23) to a payload area (PL) of the data packet (P),
- in which each channel (21, 22, 23) respectively has an associated storage area (210, 230) for its transmit data (TD),
- in which the master (2) is configured to write an identifier (ILI) associated with the selected channel (21, 22, 23) to the data packet (P),
- in which the master (2) is configured to transmit the data packet (P) comprising the identifier (ILI) and the transmit data (TD) to the slave (81, 82),
- in which the slave (81, 82) is configured to receive the data packet (P), to read at least some of the transmit data (TD) and/or to write at least some of the receive data on the basis of the identifier (ILI) and to transmit the data packet (P') back to the master (2),
- in which the master (2) is configured to receive the data packet (P'),
- in which the master (2) is configured to assign the received data packet (P') to the selected channel (21, 22, 23) on the basis of the identifier (ILI),
- in which the master (2) is configured to store the receive data (RD) from the received data packet (P') in the selected channel (21, 22, 23), and
- in which the master (2) is configured to write at least some of the receive data (RD) stored in the selected channel (21, 22, 23) to the transmit data (TD) for a data packet (P) to be subsequently transmitted via the bus (3).

## Revendications

1. Maître (2) d'un système de bus (1) destiné à la commande de processus comportant un esclave (81, 82) et un bus (3), comprenant
- un circuit émetteur-récepteur (30) destiné à envoyer des données d'émission (TD) et à recevoir des données de réception (RD) pour la commande de processus au moyen de paquets de données (P, P'),
- un canal (21, 22, 23) qui présente une zone de mémoire de réception (210),
- le circuit émetteur-récepteur (30) étant aménagé pour écrire dans la zone de mémoire de réception (210) les données de réception (RD) d'un paquet de données reçu (P') sur le bus (3),
- le canal (21, 22, 23) présentant au moins un circuit de sélection (220), une sortie (225) du circuit de sélection (220) étant reliée au circuit émetteur-récepteur (30),
- le circuit de sélection (220) présentant une première entrée (221) pour sélectionner des premières données (D1),
- le circuit de sélection (220) présentant une deuxième entrée (222), la deuxième entrée (222) étant reliée à la zone de mémoire de réception (210), et
- le circuit de sélection (220) étant aménagé pour sélectionner les données d'émission (TD) parmi les données de réception (RD) écrites dans la zone de mémoire de réception (210) et pour sortir les données d'émission (TD) dans le circuit émetteur-récepteur (30) pour un paquet de données (P) à envoyer sur le bus (3).

2. Maître (2) selon la revendication 1,
- le circuit émetteur-récepteur (30) étant aménagé pour générer les paquets de données (P, P') pour les données d'émission (TD) et les données de réception (RD), en particulier avec un en-tête (H) et une zone de données (PL) pour les données d'émission (TD) ou les données de réception (RD).

3. Maître (2) selon l'une quelconque des revendications précédentes,
- le circuit émetteur-récepteur (30) étant aménagé pour recevoir un paquet de données (P') comportant un en-tête (H) et une zone de données (PL) sur le bus (3), et pour lire les données de réception (RD) à partir de la zone de données (PL) du paquet de données reçu (P').

4. Maître (2) selon l'une quelconque des revendications précédentes,
- le circuit émetteur-récepteur (30) étant aménagé pour générer un paquet de données (P) à envoyer comportant un en-tête (H) et une zone de données (PL).

5. Maître (2) selon l'une quelconque des revendications précédentes,
- la liaison entre la zone de mémoire de réception (210) et la deuxième entrée (222) étant réalisée pour la transmission directe des données de réception (RD).

6. Maître (2) selon l'une quelconque des revendications précédentes,
- le circuit émetteur-récepteur (30) étant aménagé pour écrire les données d'émission (TD) dans la zone de données (PL) du paquet de données (P) à envoyer tout en générant le paquet de données (P) à envoyer.

7. Maître (2) selon l'une quelconque des revendications précédentes,
- le circuit émetteur-récepteur (30) étant aménagé pour vérifier les données de réception (RD) du paquet de données reçu (P').

8. Maître (2) selon l'une quelconque des revendications précédentes,
- la zone de mémoire de réception (210) ayant au moins une taille permettant de stocker en même temps toutes les données de réception (RD) du paquet de données reçu (P').

9. Maître (2) selon l'une quelconque des revendications précédentes,
- la zone de mémoire de réception (210) présentant une première mémoire tampon (211) et une deuxième mémoire tampon (212),
- le circuit émetteur-récepteur (30) étant aménagé pour
o écrire les données de réception (RD) dans la deuxième mémoire tampon (212) si des données de réception (RD) précédentes d'un paquet de données reçu précédemment sont stockées dans la première mémoire tampon (211) comme des données de réception (RD) valables, ou
o écrire les données de réception (RD) dans la première mémoire tampon (211) si des données de réception (RD) précédentes d'un paquet de données reçu précédemment sont stockées dans la deuxième mémoire tampon (212) comme des données de réception (RD) valables.

10. Maître (2) selon la revendication 9,
- le circuit de sélection (220) pour la sélection des données d'émission (TD) dans la zone de mémoire de réception (210) étant aménagé pour sélectionner les données de réception (RD) dans celle de la première mémoire tampon (211) ou de la deuxième mémoire tampon (212) qui proviennent du paquet de données reçu (P') en dernier et présentant des données de réception (RD) valables.

11. Maître (2) selon l'une quelconque des revendications précédentes,
- le circuit émetteur-récepteur (30) étant aménagé pour associer le canal (21, 22, 23) aux données d'émission (TD) et/ou aux données de réception (RD) au moyen d'un identifiant (ILI) dans le paquet de données (P, P').

12. Maître (2) selon la revendication 11,
- le circuit émetteur-récepteur (30) présentant une première machine à états finis (310) et étant aménagé pour générer le paquet de données (P, P') pour la commande de processus avec l'identifiant (ILI) au moyen de la première machine à états finis (310).

13. Maître (2) selon l'une des revendications 11 et 12,
- le circuit émetteur-récepteur (30) présentant une deuxième machine à états finis (320) et étant aménagé pour écrire dans la zone de mémoire de réception (210) du canal (21, 22, 23) les données de réception (RD) du paquet de données reçu (P') sur la base de l'identifiant (ILI) contenu dans le paquet de données reçu (P') et de l'association au canal (21, 22, 23).

14. Maître (2) selon l'une quelconque des revendications précédentes,
- le circuit émetteur-récepteur (30) présentant une entrée de commande (31) et étant aménagé pour générer le paquet de données (P) sur la base d'un signal de commande (St) à l'entrée de commande (31).

15. Maître (2) selon l'une quelconque des revendications précédentes,
- le circuit de sélection (220) étant aménagé pour sélectionner les données d'émission (TD) parmi les premières données (D1) et les données de réception (RD) écrites dans la zone de mémoire de réception (210).

16. Maître (2) selon la revendication 15,
- le canal (21, 23) présentant une zone de mémoire d'émission (230) pour stocker les premières données (D1).

17. Maître (2) selon la revendication 16,
- comprenant un circuit d'interface de bus de terrain (60), le circuit d'interface de bus de terrain (60) étant relié à la zone de mémoire d'émission (230) du canal (21, 23) pour entrer des données de processus reçues sur un bus de terrain (9) comme les premières données (D1) dans la zone de mémoire d'émission (230).

18. Maître (2) selon l'une quelconque des revendications précédentes,
- le circuit de sélection (220) étant aménagé pour la sélection granulaire au niveau du bit dans laquelle le circuit de sélection (220) compose bit par bit des bits d'émission des données d'émission (TD) à partir de bits des premières données (D1) et de bits des données de réception (RD).

19. Maître (2) selon l'une quelconque des revendications précédentes,
- la première entrée (221) du circuit de sélection (220) présentant pour les premières données (D1) une largeur binaire de plusieurs bits, et
- le circuit de sélection (220) présentant un élément de commutation (2201, 2202, 2203, 2204) pour chacun des plusieurs bits,
- le circuit de sélection (220) étant aménagé de telle sorte que les éléments de commutation (2201, 2202, 2203, 2204) peuvent être pilotés indépendamment les uns des autres.

20. Maître (2) selon l'une quelconque des revendications précédentes,
- le canal (21) présentant une zone de mémoire de commande (240) comprenant des valeurs de commande pour commander le circuit de sélection (220).

21. Maître (2) selon l'une quelconque des revendications précédentes,
- les premières données (D1) du canal (22) étant des données fixes - formées en particulier par des connexions au potentiel haut et/ou au potentiel bas - qui sont appliquées à la première entrée (221) du circuit de sélection (220).

22. Maître (2) selon la revendication 21,
- la zone de mémoire de réception (210) présentant une sortie de commande (219) pour sortir un signal de commande (NE) pour commander le circuit de sélection (220),
- la zone de mémoire de réception (210) étant aménagée pour appliquer une valeur du signal de commande (NE) sur la base de la réception des données de réception (RD) à une entrée (226) du circuit de sélection (220).

23. Procédé d'exploitation d'un système de bus (1) destiné à la commande de processus, comportant un maître (2) et un esclave (81, 82),
- le maître (2) générant un paquet de données (P) avec des données d'émission (TD) pour la commande de processus,
- le maître (2) écrivant les données d'émission (TD) à partir d'un canal sélectionné (21, 22, 23) dans une zone de données utiles (PL) du paquet de données (P),
- le maître (2) écrivant dans le paquet de données (P) un identifiant (ILI) associé au canal sélectionné (21, 22, 23),
- le maître (2) envoyant à l'esclave (81, 82) le paquet de données (P) contenant l'identifiant (ILI) et les données d'émission (TD),
- le paquet de données (P) envoyé à l'esclave (81, 82) étant retransmis au maître (2) et le paquet de données (P') étant reçu par le maître (2),
- le maître (2) associant le paquet de données reçu (P') au canal sélectionné (21, 22, 23) sur la base de l'identifiant (ILI),
- les données de réception (RD) du paquet de données reçu (P') étant stockées dans le canal sélectionné (21, 22, 23), et
- au moins une partie des données de réception (RD) stockées dans le canal sélectionné (21, 22, 23) étant écrites dans les données d'émission (TD) pour un paquet de données (P) à envoyer par la suite sur le bus (3).

24. Procédé selon la revendication 23,
- le maître (2) déterminant une non participation d'un esclave (81) à une communication de bus sur le bus (3),
- le maître (2) écrivant une partie des données de réception (RD), associée à l'esclave (81) déterminé dans les données d'émission (TD) du canal (21, 22, 23).

25. Procédé selon la revendication 23,
- dans lequel, les données de réception (RD) stockées dans le canal sélectionné (21, 22, 23) sont écrites entièrement dans les données d'émission (TD) pour un paquet de données (P) à envoyer par la suite.

26. Système de bus (1) destiné à la commande de processus, comprenant un maître (2) et un esclave (81, 82),
- le maître (2) étant aménagé pour générer un paquet de données (P) avec des données d'émission (TD) pour la commande de processus,
- le maître (2) étant aménagé pour écrire les données d'émission (TD) à partir d'un canal sélectionné (21, 22, 23) dans une zone de données utiles (PL) du paquet de données (P),
- chaque canal (21, 22, 23) présentant respectivement une zone de mémoire associée (210, 230) pour ses données d'émission (TD),
- le maître (2) étant aménagé pour écrire un identifiant (ILI) associé au canal sélectionné (21, 22, 23) dans le paquet de données (P),
- le maître (2) étant aménagé pour envoyer à l'esclave (81, 82) le paquet de données (P) contenant l'identifiant (ILI) et les données d'émission (TD),
- l'esclave (81, 82) étant aménagé pour recevoir le paquet de données (P), pour lire sur la base de l'identifiant (ILI) au moins une partie des données d'émission (TD), et/ou pour envoyer au moins une partie des données de réception et renvoyer le paquet de données (P') au maître (2),
- le maître (2) étant aménagé pour recevoir le paquet de données (P'),
- le maître (2) étant aménagé pour associer au canal sélectionné (21, 22, 23) le paquet de données reçu (P') sur la base de l'identifiant (ILI), et
- le maître (2) étant aménagé pour stocker les données de réception (RD) du paquet de données reçu (P') dans le canal sélectionné (21, 22, 23), et
- le maître (2) étant aménagé pour écrire dans les données d'émission (TD) au moins une partie des données de réception (RD) stockées dans le canal sélectionné (21, 22, 23) pour un paquet de données (P) à envoyer par la suite sur le bus (3).
